# EUROPEAN PATENT APPLICATION

(11) **EP 4 648 326 A1**
(43) Date of publication of application: **12.11.2025**
(21) Application number: 23914006.4
(22) Date of filing: 04.01.2023
(51) Int. Cl.: H04L 1/1829

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Mewburn Ellis LLP
(86) International application number: PCT/CN2023/070549
(87) International publication number: WO 2024/145847

(57) **Abstract**

This disclosure relates to a communication method, a device, a computer-readable storage medium, a computer program product, and a computer program. The method includes the following. A first device receives first information, where the first information is used for determining a feedback duration, the feedback duration is used for determining a value of a first timer, and the first timer is started when a first request message is sent.

## Description

### TECHNICAL FIELD

This disclosure relates to the field of communication, and more specifically to a communication method, a device, a computer-readable storage medium, a computer program product, and a computer program.

### BACKGROUND

In the related art, there is a scenario where a device sends a request message to another device and then receives a corresponding reply message. However, in this scenario, how to prevent the device from erroneously determining that a peer end is unable to reply becomes a problem to be solved.

### SUMMARY

A communication method, a device, a computer-readable storage medium, a computer program product, and a computer program are provided in embodiments of the disclosure.

A communication method is provided in embodiments of the disclosure. The method includes the following. A first device receives first information, where the first information is used for determining a feedback duration, the feedback duration is used for determining a value of a first timer, and the first timer is started when a first request message is sent.

A communication method is provided in embodiments of the disclosure. The method includes the following. A second device sends first information to a first device, where the first information is used for determining a feedback duration, the feedback duration is used for determining a value of a first timer, and the first timer is started when a first request message is sent.

A first device is provided in embodiments of the disclosure. The first device includes a first communication unit. The first communication unit is configured to receive first information, where the first information is used for determining a feedback duration, the feedback duration is used for determining a value of a first timer, and the first timer is started when a first request message is sent.

A second device is provided in embodiments of the disclosure. The second device includes a second communication unit. The second communication unit is configured to send first information to a first device, where the first information is used for determining a feedback duration, the feedback duration is used for determining a value of a first timer, and the first timer is started when a first request message is sent.

A first device is provided in embodiments of the disclosure. The first device includes a processor and a memory. The memory is configured to store a computer program. The processor is configured to invoke and execute the computer program stored in the memory, to cause the first device to perform the above method.

A second device is provided in embodiments of the disclosure. The second device includes a processor and a memory. The memory is configured to store a computer program. The processor is configured to invoke and execute the computer program stored in the memory, to cause the second device to perform the above method.

A chip is provided in embodiments of the disclosure. The chip is configured to implement the above method
Specifically, the chip includes a processor. The processor is configured to invoke and execute a computer program stored in a memory, to cause a device equipped with the chip to perform the above method.

A computer-readable storage medium is provided in embodiments of the disclosure. The computer-readable storage medium is configured to store a computer program which, when executed by a device, causes the device to perform the above method.

A computer program product is provided in embodiments of the disclosure. The computer program product includes computer program instructions which cause a computer to perform the above method.

A computer program is provided in embodiments of the disclosure. The computer program, when executed by a computer, causes the computer to perform the above method.

By using the solution provided in the embodiments, a first device can obtain first information and then can determine a feedback duration according to the first information, where the feedback duration is used for determining a value of a first timer, and the first timer is started when a first request message is sent. As such, through interaction of the first information, the first device can determine the value of the first timer. Therefore, when the first request message is sent, a duration for waiting for a reply message can be maintained by using the first timer, thereby preventing erroneous determination that a peer end is unable to reply.

### BRIEF DESCRIPTION OF THE DRAWINGS

FIG. 1 is a schematic diagram of an application scenario according to embodiments of the disclosure.
FIG. 2 is a schematic diagram of a zero-power-based communication scenario.
FIG. 3 is a schematic flowchart of a communication method according to an embodiment of the disclosure.
FIG. 4 is a schematic flowchart of a communication method according to another embodiment of the disclosure.
FIG. 5 is a diagram of an example processing procedure of a zero-power terminal according to the disclosure.
FIGs. 6 to 12 are schematic flowcharts of multiple examples of a communication method according to an embodiment of the disclosure.
FIG. 13 is a schematic block diagram of a first device according to an embodiment of the disclosure.
FIG. 14 is a schematic block diagram of a first device according to another embodiment of the disclosure.
FIG. 15 is a schematic block diagram of a second device according to an embodiment of the disclosure.
FIG. 16 is a schematic block diagram of a second device according to another embodiment of the disclosure.
FIG. 17 is a schematic block diagram of a communication device according to embodiments of the disclosure.
FIG. 18 is a schematic block diagram of a chip according to embodiments of the disclosure.
FIG. 19 is a schematic block diagram of a communication system according to embodiments of the disclosure.

### DETAILED DESCRIPTION

The following will describe technical solutions of embodiments of the disclosure with reference to the accompanying drawings in embodiments of the disclosure.

The technical solutions of the embodiments of the disclosure may be applied to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5th generation (5G) system, or other communication systems.

Generally speaking, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, vehicle to everything (V2X) communication, or the like. Embodiments of the disclosure can also be applied to these communication systems.

In some possible implementations, a communication system in embodiments of the disclosure may be applied to a carrier aggregation (CA) scenario, a dual connectivity (DC) scenario, or a standalone (SA) network deployment scenario.

In some possible implementations, the communication system in embodiments of the disclosure may be applied to an unlicensed spectrum, and the unlicensed spectrum may be regarded as a shared spectrum. Alternatively, the communication system in embodiments of the disclosure may be applied to a licensed spectrum, and the licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, and the like.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device or other processing device connected to a wireless modem, an in-vehicle device, a wearable device, and a terminal device in a next-generation communication system, for example, a terminal device in an NR network, or a terminal device in a future evolved public land mobile network (PLMN), and the like.

In embodiments of the disclosure, the terminal device can be deployed on land, which includes indoor or outdoor, handheld, wearable, or in-vehicle. The terminal device can also be deployed on water (such as ships, and the like). The terminal device can also be deployed in the air (such as airplanes, balloons, satellites, and the like).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, a wireless terminal device in smart home, or the like.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, a base transceiver station (BTS) in GSM or CDMA, or may be a node B (NB) in WCDMA, or may be an evolutional node B (eNB or eNodeB) in LTE, or a relay station or an AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

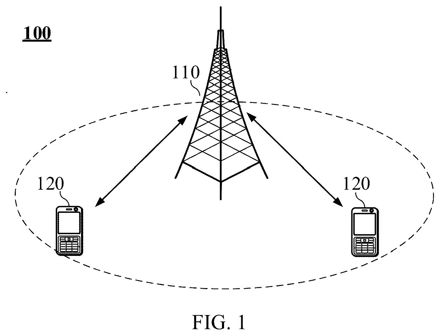

FIG. 1 exemplarily illustrates a communication system 100. The communication system 100 includes one network device 110 and two terminal devices 120. In a possible implementation, the communication system 100 may include multiple network devices 110, and there can be other quantities of terminal devices 120 in a coverage area of each of the network devices 110. Embodiments of the disclosure are not limited in this regard.

In a possible implementation, the communication system 100 may further include other network entities such as a mobility management entity (MME) and an access and mobility management function (AMF), and embodiments of the disclosure are not limited in this regard.

The network device may further include an access-network device and a core-network device, that is, the wireless communication system may further include multiple core-networks capable of communicating with the access-network device. The access-network device may be an evolutional node B (eNB or e-NodeB for short), a macro base station, a micro base station (also known as "small base station"), a pico base station, an AP, a transmission point (TP), or a new generation node B (gNodeB) in an LTE system, an NR system, or an authorized auxiliary access long-term evolution (LAA-LTE) system.

It may be understood that in embodiments of the disclosure, a device with communication functions in a network/system may be referred to as a "communication device". Taking the communication system illustrated in FIG. 1 as an example, the communication device may include the network device and the terminal device(s) that have communication functions. The network device and the terminal device(s) can be the devices in the embodiments of the disclosure, which will not be repeated herein. The communication device may further include other devices such as a network controller, a mobility management entity, or other network entities in the communication system, and embodiments of the disclosure are not limited in this regard.

For better understanding of embodiments of the disclosure, the following will give a brief description of basic procedures and basic concepts involved in the embodiments of the disclosure. It may be understood that, the basic procedures and basic concepts introduced below do not limit the embodiments of the disclosure.

Internet of things (IoT) scenarios may face extreme environments with such as high temperature, extremely low temperature, high humidity, high pressure, high radiation, or highspeed motion, such as an ultra-high voltage power station, track monitoring of a train with highspeed motion, environment monitoring of a high-cold area, an industrial production line, etc. In these scenarios, IoT terminals will not work due to the working environment limitations of conventional power supplies. In addition, the extreme working environment is not conducive to the maintenance of the IoT, such as replacing batteries. Some IoT communication scenarios, such as food traceability, commodity flow, and smart wearables, etc., require terminals to have extremely small sizes, to facilitate the use in these scenarios. For example, IoT terminals for commodity management on the flow chain usually use the form of electronic tags, which can be embedded in the commodity packaging in a very small form. For another example, lightweight wearable devices may improve the user experience while meeting the user needs. Numerous IoT communication scenarios require the IoT terminals to have a sufficiently low cost, thereby improving competitiveness with respect to other alternative technologies. For example, in logistics or warehousing scenarios, in order to facilitate the management of a large number of items in the flow, an IoT terminal may be attached to each item, so that accurate management of the entire process and the entire cycle of logistics is completed through communication between the terminal and the logistics network. These scenarios require the IoT terminals to be sufficiently competitive in the price. A zero-power communication network is a wireless communication technology suitable for short distance and low rate. A zero-power device mainly combines a radio frequency (RF) energy harvesting technology, a backscattering technology, and a low-power computing technology to achieve the advantage that a device node does not carry a power supply.

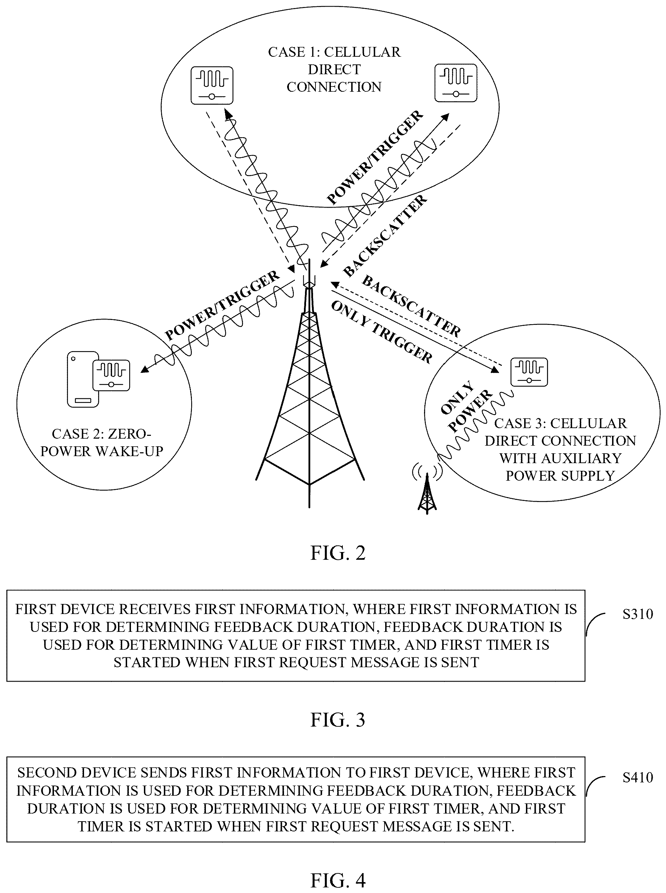

In a zero-power communication system based on backscattering, for an ambient IoT (AIoT) terminal (a zero-power terminal) based on energy harvesting, instead of generating an RF signal by itself, a backscatter transmitter modulates and reflects a received RF signal to transmit data. This technology has been widely applied in practice and production, such as radio frequency identification (RFID), a tracking device, a remote switch, medical telemetry, and a low-cost sensor network. FIG. 2 is a diagram illustrating several example operating principles of the AIoT terminal. For example, case 1 illustrated in FIG. 2 is an operating principle of the AIoT terminal in a scenario of cellular direct connection, where the AIoT terminal is powered and triggered by a base station, and accordingly, the AIoT terminal backscatters to the base station to transmit data. Case 2 illustrated in FIG. 2 is an operating principle of the AIoT terminal in a scenario of zero-power wake-up, where the AIoT terminal is powered and triggered by the base station. Case 3 illustrated in FIG. 2 is a scenario of cellular direct connection with auxiliary power supply, where the AIoT terminal is powered by one base station (for example, referred to as a first base station), and is triggered by another base station (for example, referred to as a second base station) and backscatters to the second base station to transmit data. FIG. 2 is merely an diagram of several example possible scenarios, and in actual processing, a zero-power scenario may not be limited to the several scenarios illustrated in FIG. 2, which will not be enumerated.

The AIoT terminal above may include three main modules, which involves energy harvesting, backscattering, and low-power computing respectively. The energy harvesting may also be referred to as RF energy collection or RF energy harvesting. A basic principle for the energy harvesting is to harvest energy of a spatial electromagnetic wave through electromagnetic induction. An essence of the RF energy harvesting is to convert RF energy into a direct-current voltage (RF-DC). In application to zero-power communication, a core requirement for the RF energy harvesting is to effectively use harvested energy for the driving of a load circuit (low-power operation, a sensor, or the like), so as to implement battery-free communication.

With the development of technology, the RF energy harvesting has achieved improvements in the process and efficiency but still faces several challenges. 1) Due to the multipath propagation effect of an electromagnetic wave, uneven distribution of energy in space and time, and various interferences, the RF energy that can be harvested in the wireless environment has an extremely low density (less than 10 nW/cm2), and the RF energy that can be effectively harvested needs to meet a certain input power. 2) To drive an arithmetic unit such as a logic circuit or a chip, a DC voltage converted after the energy is harvested generally needs to meet the minimum output-voltage requirement and the converted DC voltage needs to be stable. How to improve the energy harvesting efficiency, especially to ensure that the harvested energy can still drive a circuit under low-input-voltage conditions, is a problem to be solved. 3) How to reasonably manage the harvested or stored energy to drive a terminal operate.

The efficiency of converting the harvested RF energy into DC energy at a low power is a challenge in the design of the zero-power device. Currently, many experimental research results show that an RF signal with a system input power lower than -30 dBm is generally difficult to be effectively harvested and rectified into an available DC voltage. However, the RF energy conversion efficiency varies under different input powers and energy harvesting circuit designs. For example, the energy conversion efficiency at a low input power of -20 dBm is often less than 10%, and the conversion efficiency at an input power of about -1 dBm is close to 50%. Based on the current process, a power of about 10 uw is required for the driving of a low-power computing circuit. To meet the simplest low-power computing and backscattering communication requirements, improving the energy harvesting efficiency under low-input-power conditions is one of the most important tasks in the research and development of the zero-power communication system.

As can be seen from the above description, energy harvesting of the AIoT terminal is an important aspect. Since the AIoT terminal itself cannot supply power and needs to obtain power supply from an ambient environment (electromagnetic wave, thermal energy, solar energy, etc.), the energy harvesting of the AIoT terminal for the driving of a logic circuit takes a long time, and the AIoT terminal takes longer for message processing and sending than an ordinary terminal. Due to the limited performance and longer message processing time of the AIoT terminal, the AIoT terminal takes longer for message processing and reply, while most of the ordinary terminals reply immediately with a very short time and have a relatively fixed timer for a receiver to wait. Therefore, especially for the AIoT terminal, how to implement a negotiation mechanism related to a reply duration to enable a network side to wait based on a value of a timer that matches a terminal capability and prevent the network side from erroneously determining that a terminal side is unable to reply becomes a problem to be solved.

It may be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It may be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association relationship between the two, or may mean a relationship of indicating and being indicated or configuring and being configured, etc.

For better understanding of technical solutions of embodiments of the disclosure, the related art of embodiments of the disclosure will be described below. The related art below, as an optional scheme, can be arbitrarily combined with the technical solutions of embodiments of the disclosure, which shall all belong to the protection scope of embodiments of the disclosure.

FIG. 3 is a schematic flowchart of a communication method according to an embodiment of the disclosure. The method includes at least part of the following contents.

At S310, a first device receives first information. The first information is used for determining a feedback duration. The feedback duration is used for determining a value of a first timer. The first timer is started when a first request message is sent.

FIG. 4 is a schematic flowchart of a communication method according to another embodiment of the disclosure. The method includes at least part of the following contents.

At S410, a second device sends first information to a first device. The first information is used for determining a feedback duration. The feedback duration is used for determining a value of a first timer. The first timer is started when a first request message is sent.

Herein, the first device may be a second network device, and the second device may be a second terminal device.

The second network device may be one of: a second access-network device or a second core-network device. Exemplarily, the second access-network device may be a second radio access network (RAN) device, which may include, for example, any one of a base station, an eNB, a gNB, or the like, and the second core-network device may include an AMF. This is merely an exemplary description, and in application of the solution provided in this embodiment, as long as the first device is any type of network device, it falls within the protection scope of this embodiment.

The second terminal device may be one of: an IoT device based on ambient energy harvesting (for example, an ambient IoT device or an AIoT device) or a narrow band IoT (NB-IoT) terminal. It may be noted that, a "terminal" with a very simplified capability is generally referred to as a "device", but the "terminal" with the very simplified capability can still be represented by a "terminal". The "terminal" and the "device" may be generally interchangeable, which merely differ in expressions.

It may be understood that, the second terminal device may be not limited to the above two types, and may also be a normal terminal device in a mobile communication system, a simplified terminal device in the mobile communication system, or an ordinary terminal with energy saving requirements. The simplified terminal device may also be referred to as a low-capability terminal, for example, a terminal device with part of functions removed based on the normal terminal device. For example, part of data processing functions of the normal terminal device may be removed and/or part of data obtaining functions of a sensor of the normal terminal device may be removed, and all possible cases will not be enumerated herein.

In some possible implementations, the first information carries at least one of: information related to the second device or information related to a requested duration of the second device.

The information related to the second device includes at least one of: identity information of the second device, a device type of the second device, or a capability parameter of the second device.

The information related to the requested duration of the second device includes at least one of: a requested processing duration of the second device or a requested feedback duration of the second device. The requested feedback duration of the second device is longer than the requested processing duration of the second device.

The identity information of the second device may include at least one of: an electronic product code (EPC), a permanent equipment identifier (PEI), or a subscription permanent identifier (SUPI). It may be noted that, the above is merely an exemplary description of the identity information of the second device. The identity information of the second device may further include 5G globally unique temporary UE identifier (5G-GUTI), etc., and all identity information that can uniquely identify the second device falls within the protection scope of this embodiment, which will not be enumerated herein.

The device type of the second device may include any one of an AIoT terminal, an IoT terminal, a normal terminal device, a simplified terminal device, or the like. Further, the device type of the second device may also include a device-applicable type of the second device. The device-applicable type of the second device may refer to a function type that can be provided or supported by the second device. For example, the device-applicable type of the second device may include at least one of: a sensor, a monitor, a thermometer, or the like.

The capability parameter of the second device may include at least one of: computing power information of the second device or an energy-storage capability of the second device. The computing power information of the second device can be represented by the number of computations of the second device per unit time, where the unit time may be set according to actual conditions and may be, for example, a second, a millisecond, or a microsecond. Alternatively, the computing power information of the second device can be represented in any one of the following units: tera operations per second (TOPS), floating-point operations per second (FLOPS), or the like, which will not be enumerated. The computing power information of the second device may be related to a processing chip of the second device. The energy-storage capability of the second device may include capability indication information indicating whether the second device stores energy, the amount of energy that the second device can store, and the like. The energy-storage capability of the second device may also be related to hardware such as a chip and a battery used by the second device.

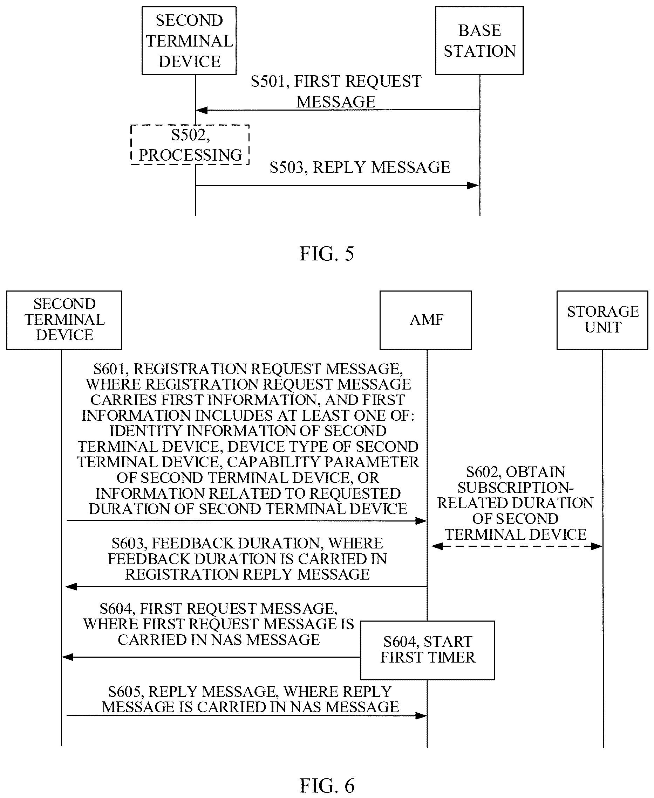

For example, the second device is a second terminal device (the second terminal device may be any one of an AIoT terminal, an IoT terminal, a normal terminal device, a simplified terminal device (or referred to as a low-capability terminal), or an ordinary terminal with energy saving requirements), and the first device is a base station, based on which definitions of a processing duration and a feedback duration will be first described with reference to FIG. 5. FIG. 5 illustrates a processing procedure from receiving a first request message by the second terminal device to sending a reply message by the second terminal device. The procedure includes the following. At S501, the base station sends the first request message to the second terminal device. At S502, the second terminal device performs processing. At S503, the second terminal device sends the reply message to the base station.

As illustrated in FIG. 5, after receiving the first request message, the second terminal device needs to perform operations at S502, i.e., the second terminal device performs processing, due to limitations of factors such as energy harvesting. A period of time required for processing at the second terminal device is the processing duration (or referred to as processing time). The processing duration may include time required for sending the reply message by the second terminal device or may not include the time required for sending the reply message. Exemplarily, the processing duration may include a duration from a moment when the second terminal device receives the first request message and before a moment when the second terminal device sends the reply message. Alternatively, the processing duration may include a duration between the moment when the second terminal device receives the first request message and the moment when the second terminal device sends the reply message. Alternatively, the processing duration may include a duration between the moment when the second terminal device receives the first request message and a moment when the second terminal device completes sending the reply message. Still with reference to FIG. 5, the feedback duration (or referred to as feedback time) may refer to time consumed from a moment when operations at S501 starts to be performed at the base station side, i.e., a sending moment when the base station sends the first request message to the second terminal device, to a moment when operations at S503 are performed, i.e., the base station receives the reply message from the second terminal device. As can be seen from the above analysis, the processing duration is generally shorter than the feedback duration.

The requested processing duration of the second device is shorter than the requested feedback duration of the second device. The requested processing duration of the second device and the requested feedback duration of the second device may be determined by the second device according to the information related to the second device, or may be preset in the second device.

Optionally, the first device receiving the first information may include the first device receiving the first information from the second device. Optionally, the first device receiving the first information may include the first device receiving the first information from a fifth device. The fifth device may be an application server. The application server may be a server used by any one of a third-party application service provider, a service provider, or an operator, etc., related to the second device. The first device may be a second core-network device or a second access-network device. Descriptions will be separately provided below.

In some possible implementations, the first device receiving the first information may include the first device receiving the first information from the second device.

The first information may be carried in a non-access stratum (NAS) message. Alternatively, the first information may be carried in an access stratum (AS) message.

Optionally, the first information is carried in the NAS message. In this scenario, the first device may be a second core-network device, and the second device may be a second terminal device. The NAS message may be a registration request message. It may be understood that the NAS message may also be another NAS message other than the registration request message, which will not be enumerated in this embodiment.

Optionally, the first information is carried in the AS message. In this scenario, the first device may be a second access-network device, and the second device may be a second terminal device. Exemplarily, the AS message may be a radio resource control (RRC) message. The AS message may not be limited to the RRC message, and may also be another AS message, for example, any one of a packet data convergence protocol (PDCP) layer message, a radio link control (RLC) layer message, a medium access control (MAC) layer message, a physical (PHY) layer message, or a message of a newly-designed new AS protocol layer.

In some possible implementations, after receiving the first information, the first device determines a feedback duration based on the first information.

In a possible embodiment, the first information carries the information related to the second device, the feedback duration is determined based on a subscription-related duration of the second device, and the subscription-related duration of the second device is determined based on the information related to the second device.

The first information may carry only the information related to the second device, and does not carry the information related to the requested duration of the second device.

In this scenario, the processing performed by the first device may include the following. The first device queries whether a storage unit stores a subscription-related duration of the second device that matches the information related to the second device. If the storage unit stores the subscription-related duration of the second device that matches the information related to the second device, the first device extracts the subscription-related duration of the second device. The first device determines the feedback duration based on the subscription-related duration of the second device. In addition, the processing performed by the first device may include the following. If the storage unit stores no subscription-related duration of the second device that matches the information related to the second device, the first device can set a default duration as the feedback duration. The default duration may be preset or configured according to a protocol, which is not limited in this embodiment.

The storage unit may be a storage unit or a storage network element at a core-network side, and unless otherwise specified hereinafter, the storage unit is the same concept as the storage network element, which will not be repeated. The subscription-related duration of the second device stored in the storage unit may be pre-configured and stored in the storage unit by any one of a service provider, an operator, or a third-party application service provider, etc. The storage unit can store the subscription-related duration of the second device by using a list. For example, the storage unit can store a list, where the list contains the identity information of the second device and the subscription-related duration of the second device.

Exemplarily, the first device may be a second core-network device, such as an AMF. Accordingly, the first device queries whether the storage unit stores the subscription-related duration of the second device that matches the information related to the second device as follows. The second core-network device can directly query whether the storage unit stores the subscription-related duration of the second device that matches the information related to the second device.

Exemplarily, the first device may be a second access-network device, such as a gNB. Accordingly, the first device queries whether the storage unit stores the subscription-related duration of the second device that matches the information related to the second device as follows. The second access-network device can directly query through an N2 interface whether the storage unit stores the subscription-related duration of the second device that matches the information related to the second device. Alternatively, the second access-network device can interact with a core-network element (such as an AMF), so that the core-network element queries the storage unit and feeds back to the second access-network device whether the storage unit stores the subscription-related duration of the second device that matches the information related to the second device. Preferably, if the first device is the second access-network device, the first device can perform processing by interacting with the core-network element and the core-network element querying the storage unit and sending feedback. This is because there is no direct connection between the storage network element and the access-network device, and the deployment cost is high. By comparison, the forwarding with the core-network element (such as an AMF) can be implemented by invoking and enhancing only an existing service procedure.

Optionally, the subscription-related duration of the second device includes at least one of: a subscribed processing duration of the second device or a subscribed feedback duration of the second device. The subscribed feedback duration of the second device is longer than the subscribed processing duration of the second device.

When the subscription-related duration of the second device includes the subscribed feedback duration of the second device, the feedback duration is the subscribed feedback duration of the second device. The subscription-related duration of the second device may include only the subscribed feedback duration of the second device. Alternatively, the subscription-related duration of the second device may include both the subscribed feedback duration of the second device and the subscribed processing duration of the second device. However, as long as the subscription-related duration of the second device includes the subscribed feedback duration of the second device, the subscribed feedback duration of the second device can be determined as the feedback duration.

That is, the feedback duration is determined based on the subscription-related duration of the second device as follows. When the subscription-related duration of the second device includes the subscribed feedback duration of the second device, the first device determines the subscription-related duration of the second device as the feedback duration.

When the subscription-related duration of the second device includes the subscribed processing duration of the second device and does not include the subscribed feedback duration of the second device, the feedback duration is one of: the subscribed processing duration of the second device increased by a first duration; or the subscribed processing duration of the second device.

That is, the feedback duration is determined based on the subscription-related duration of the second device as follows. When the subscription-related duration of the second device includes the subscribed processing duration of the second device and does not include the subscribed feedback duration of the second device, the first device determines the feedback duration based on the subscribed processing duration of the second device. Determining the feedback duration based on the subscribed processing duration of the second device may refer to one of: obtaining the feedback duration by increasing the subscribed processing duration of the second device by the first duration; or determining the subscribed processing duration of the second device as the feedback duration.

The first duration may be preset, or determined based on the subscribed processing duration of the second device, or determined based on the information related to the second device. When the first duration is preset, the first duration may be a first duration common to all terminal devices. When the first duration is determined based on the subscribed processing duration of the second device, the first duration may be equal to a preset ratio multiplied by the subscribed processing duration of the second device. The preset ratio may be configured according to actual conditions and may be, for example, 1/10, 1/20, or larger or smaller, which is not limited herein. When the first duration is determined based on the information related to the second device, multiple candidate durations and information related to a device that matches each of the candidate durations may be preset, and accordingly, a matched candidate duration may be determined as the first duration based on the information related to the second device.

The number of the subscribed processing durations of the second device is one, and the number of the subscribed feedback durations of the second device is also one.

Optionally, the subscription-related duration of the second device includes at least one of: multiple subscribed processing durations of the second device or multiple subscribed feedback durations of the second device.

The multiple subscribed feedback durations of the second device include a subscribed feedback duration of the second device under each of multiple conditions. The multiple subscribed processing durations of the second device include a subscribed processing duration of the second device under each of multiple conditions. Different conditions among the multiple conditions correspond to different protocol types and/or different message types.

A protocol type corresponding to any condition may include any one of existing protocols such as NAS protocol, RRC protocol, MAC protocol, RLC protocol, PDCP, service data adaptation protocol (SDAP), PHY protocol, or the like, or may be a brand new protocol designed for IoT communication. A message type corresponding to any condition may include any one of existing messages such as NAS message, AS message, paging message, broadcast message, multicast message, RRC message, MAC CE, RLC, or the like, which will not be enumerated herein, or may be a brand new message designed for IoT communication. It may be understood that, there may be one or more message types under any protocol type.

Exemplarily, the storage unit can store a subscription-related duration of a device by using a list. For example, the storage unit can store a list, where the list contains identity information of the device and a subscribed feedback duration and/or a subscribed processing duration of the device under each of multiple conditions. Taking subscription-related durations of any two devices stored in the storage unit as an example, an exemplary description will be given with reference to Table 1.

**Table 1**

| Identity information of the device | Protocol type | Message type | Subscribed feedback duration | Subscribed processing duration |
|---|---|---|---|---|
| Device 001 | NAS protocol | NAS message 1 | Duration A1 | Duration B1 |
| | | Paging message | Duration A2 | Duration B2 |
| | RRC protocol | | Duration A3 | |
| Device 002 | NAS protocol | | Duration A1 | Duration B1 |
| | | AS message 1 | Duration A4 | Duration B3 |

As can be seen from Table 1 above, the identity information of the two devices is as illustrated in Table 1: device 001 and device 002 respectively. It may be understood that this is merely an exemplary description, and in actual processing, the identity information of the device may be represented in any form provided in the above embodiment, which will not be repeated. Table 1 further illustrates that for device 001 under the condition of the protocol type of NAS protocol and the message type of NAS message 1, the subscribed feedback duration is duration A1 and the subscribed processing duration is duration B1 (where B1 is shorter than A1); for device 001 under the condition of the message type of paging message, the subscribed feedback duration is duration A2 and the subscribed processing duration is duration B2 (where B2 is shorter than A1); and for device 001 under the condition of the protocol type of RRC protocol, the subscribed feedback duration is duration A3 and the subscribed processing duration is duration B2 (where B2 is shorter than A3). In addition, the respective devices may correspond to the same condition or different conditions. For example, device 002 in Table 1 may have only two conditions. For device 002 under the condition of the protocol type of NAS protocol, the subscribed feedback duration is duration A1 and the subscribed processing duration is duration B1. For device 002 under the condition of the message type of AS message 1, the subscribed feedback duration is duration A4 and the subscribed processing duration is duration B3 (where B3 is shorter than A4). Table 1 above is merely taken as an example for description. In actual processing, the storage unit can store information related to subscribed durations of more devices under different conditions, and the respective devices may correspond to more conditions. For some devices under some conditions, there may be only any one of the subscribed processing duration or the subscribed feedback duration, which will not be enumerated herein.

In a possible example, when the subscription-related duration of the second device includes the multiple subscribed feedback durations of the second device, the feedback duration includes the multiple subscribed feedback durations of the second device.

In this example, the subscription-related duration of the second device may include only the multiple subscribed feedback durations of the second device, or may include both the multiple subscribed feedback durations of the second device and the multiple subscribed processing durations of the second device. Since currently, the first device may be not sure of a target protocol type and/or a target message type used by the second device, when the first device finds the multiple subscribed feedback durations of the second device in the storage unit, the first device can extract the subscribed feedback duration of the second device under each of the multiple conditions as the feedback duration. The feedback duration may also be in the form of a list.

Based on Table 1, for example, assuming that the second device is device 001, the first device can extract subscription-related durations of device 001, and then determine each of the subscription-related durations of device 001 as the feedback duration. Herein, the subscription-related durations of device 001 extracted by the first device may be illustrated in Table 2.

**Table 2**

| Identity information of the device | Protocol type | Message type | Subscribed feedback duration | Subscribed processing duration |
|---|---|---|---|---|
| Device 001 | NAS protocol | NAS message 1 | Duration A1 | Duration B1 |
| | | Paging message | Duration A2 | Duration B2 |
| | RRC protocol | | Duration A3 | |

As can be seen from Table 2 above, the first device extracts only the subscription-related durations of device 001, and the subscription-related durations of device 001, including the subscribed feedback duration of duration A1 and the subscribed processing duration of duration B1 under the condition of the protocol type of NAS protocol, the subscribed feedback duration of duration A2 and the subscribed processing duration of duration B2 under the condition of the message type of paging message, and the subscribed feedback duration of duration A3 and the subscribed processing duration of duration B2 under the condition of the protocol type of RRC protocol, each are extracted as the feedback duration. Unless otherwise specified hereinafter, as long as the feedback duration includes the subscription-related duration under each of the multiple conditions, the feedback duration may be in the form of a list.

In a possible example, when the subscription-related duration of the second device includes the multiple subscribed processing durations of the second device and does not include the multiple subscribed feedback durations of the second device, the feedback duration includes one of: the multiple subscribed processing durations of the second device each increased by a first duration; or the multiple subscribed processing durations of the second device. Herein, the related description of the first duration is the same as that in the above embodiment, which will not be repeated.

In this example, the subscription-related duration of the second device may include only the multiple subscribed processing durations of the second device. Since currently, the first device may be not sure of a target protocol type and/or a target message type used by the second device, when the first device finds the multiple subscribed processing durations of the second device in the storage unit, the first device can extract each of the multiple subscribed processing durations of the second device. Then, the first device can determine each of the multiple subscribed processing durations of the second device increased by the first duration as the feedback duration, or the first device can determine each of the multiple subscribed processing durations of the second device as the feedback duration.

In another possible example, when the subscription-related duration of the second device includes the multiple subscribed feedback durations of the second device, the feedback duration is a subscribed feedback duration of the second device under a target condition. The target condition includes at least one of: a target protocol type used by the second device or a target message type used by the second device.

The subscription-related duration of the second device may include only the multiple subscribed feedback durations of the second device, or may include both the multiple subscribed feedback durations of the second device and the multiple subscribed processing durations of the second device.

In this example, the first device can determine the target protocol type and/or the target message type used by the second device. Therefore, when the first device finds the multiple subscribed feedback durations of the second device in the storage unit, the first device can determine as the feedback duration the subscribed feedback duration of the second device under the target condition consisting of the target protocol type and/or the target message type.

In another possible example, when the subscription-related duration of the second device includes the multiple subscribed processing durations of the second device and does not include the multiple subscribed feedback durations of the second device, the feedback duration is one of: a subscribed processing duration of the second device under a target condition increased by a first duration; or the subscribed processing duration of the second device under the target condition. The target condition includes at least one of: a target protocol type used by the second device or a target message type used by the second device.

The related description of the first duration is the same as that in the above embodiment, which will not be repeated.

In this example, the subscription-related duration of the second device may include only the multiple subscribed processing durations of the second device. In a case where the first device determines the target protocol type and/or the target message type used by the second device, the processing performed by the first device may include the following. When the first device finds the multiple subscribed processing durations of the second device in the storage device, the first device can determine as the feedback duration the subscribed processing duration of the second device under the target condition consisting of the target protocol type and/or the target message type. Alternatively, the processing performed by the first device may include the following. When the first device finds the multiple subscribed processing durations of the second device in the storage device, the first device can determine as the feedback duration a target duration value of the subscribed processing duration of the second device under the target condition consisting of the target protocol type and/or the target message type increased by the first duration.

In another possible embodiment, the first information carries both the information related to the second device and the information related to the requested duration of the second device. The feedback duration is determined based on the information related to the requested duration of the second device when no subscription-related duration of the second device is obtained based on the information related to the second device.

That is to say, although the first information carries the information related to the second device, the first device may find no subscription-related duration of the second device in the storage unit based on the information related to the second device. In this case, the first device determines the feedback duration based on the information related to the requested duration of the second device.

In this embodiment, the processing performed by the first device may include the following. The first device queries, based on the information related to the second device, whether the storage unit stores a subscription-related duration of the second device that matches the information related to the second device. If the storage unit stores the subscription-related duration of the second device that matches the information related to the second device, the first device extracts the subscription-related duration of the second device. The first device determines the feedback duration based on the subscription-related duration of the second device. If the storage unit stores no subscription-related duration of the second device that matches the information related to the second device, the first device determines the feedback duration based on the information related to the requested duration of the second device.

The information related to the requested duration of the second device and a manner for determining the feedback duration based on the subscription-related duration of the second device have been described in the above embodiment, which will not be repeated.

When the information related to the requested duration of the second device includes a requested feedback duration of the second device, the feedback duration is the requested feedback duration of the second device. Alternatively, when the information related to the requested duration of the second device includes a requested processing duration of the second device and does not include a requested feedback duration of the second device, the feedback duration is the requested processing duration of the second device increased by a first duration. Alternatively, when the information related to the requested duration of the second device includes a requested processing duration of the second device and does not include a requested feedback duration of the second device, the feedback duration is the requested processing duration of the second device.

The related description of the first duration above is the same as that in the above embodiment, which will not be repeated.

Specifically, determining the feedback duration based on the information related to the requested duration of the second device includes one of the following. When the information related to the requested duration of the second device includes the requested feedback duration of the second device, the first device determines the requested feedback duration of the second device as the feedback duration. When the information related to the requested duration of the second device includes the requested processing duration of the second device and does not include the requested feedback duration of the second device, the first device determines the requested processing duration of the second device increased by the first duration as the feedback duration. When the information related to the requested duration of the second device includes the requested processing duration of the second device and does not include the requested feedback duration of the second device, the first device determines the requested processing duration of the second device as the feedback duration.

Further, when the information related to the requested duration of the second device includes the requested feedback duration of the second device, the first device may determine the requested feedback duration of the second device as the feedback duration as follows. When the information related to the requested duration of the second device includes the requested feedback duration of the second device and includes the requested processing duration of the second device, or when the information related to the requested duration of the second device includes the requested feedback duration of the second device and does not include the requested processing duration of the second device, the first device determines the requested feedback duration of the second device as the feedback duration. That is, as long as the information related to the requested duration of the second device includes the requested feedback duration of the second device, the first device determines the requested feedback duration of the second device as the above feedback duration regardless of whether the information related to the requested duration of the second device includes the requested processing duration of the second device.

In another possible embodiment, when the first information does not carry the information related to the second device and carries the information related to the requested duration of the second device, the feedback duration is determined based on the information related to the requested duration of the second device.

That is to say, the first information does not carry the information related to the second device, and in this case, the first device cannot obtain the subscription-related duration of the second device. Therefore, the first device determines the feedback duration based on the information related to the requested duration of the second device carried in the first information.

The information related to the requested duration of the second device has been described in the above embodiment, which will not be repeated.

The feedback duration is determined based on the information related to the requested duration of the second device. A specific manner for determining the feedback duration by the first device based on the information related to the requested duration of the second device is the same as that in the above embodiment, which will not be repeated.

In some possible implementations, after the first device receives the first information from the second device, the method may further include the following. The first device sends second information to the second device, where the second information carries the feedback duration.

Accordingly, after the second device sends the first information to the first device and before the second device receives the first request message, the method further includes the following. The second device receives second information from the first device, where the second information carries the feedback duration.

After the second device receives the second information, the second device may further determine a value of a second timer based on the feedback duration. The second timer is started when the second device receives the first request message. The second timer can be used by the second device for determining that the second device sends reply data before the second timer expires.

Optionally, the feedback duration may be one of: a subscribed feedback duration of the second device, a subscribed processing duration of the second device increased by a first duration, the subscribed processing duration of the second device, a subscribed feedback duration of the second device under a target condition, a subscribed processing duration of the second device under the target condition increased by the first duration, the subscribed processing duration of the second device under the target condition, a requested feedback duration of the second device, a requested processing duration of the second device increased by the first duration, or the requested processing duration of the second device. Before the second timer expires, the processing is completed, and a reply message is sent. In this case, the value of the second timer is equal to the feedback duration.

Optionally, the feedback duration may include one of: a subscribed processing duration of the second device under each of multiple conditions, the subscribed processing duration of the second device under each of the multiple conditions increased by a first duration, or a subscribed processing duration of the second device under each of the multiple conditions. Different conditions among the multiple conditions correspond to different protocol types and/or different message types.

In this case, the value of the second timer is determined based on the feedback duration and a target condition, where the target condition includes one of: a target protocol type used by the second device or a target message type used by the second device. The second device may determine the value of the second timer based on the feedback duration and the target condition as follows. In a case where the second device determines the target protocol type and/or the target message type, the second device determines the target protocol type and/or the target message type as the target condition, determines a target subscribed feedback duration based on the target condition and the subscribed feedback duration of the second device under each of the multiple conditions included in the feedback duration, and determines the target subscribed feedback duration as the value of the second timer. Alternatively, in a case where the second device determines the target protocol type and/or the target message type, the second device determines the target protocol type and/or the target message type as the target condition, determines a target subscribed processing duration based on the target condition and the subscribed processing duration of the second device under each of the multiple conditions included in the feedback duration, and determines the target subscribed processing duration as the value of the second timer. Alternatively, in a case where the second device determines the target protocol type and/or the target message type, the second device determines the target protocol type and/or the target message type as the target condition, determines a duration value of a target subscribed processing duration increased by the first duration based on the target condition and a duration value of the subscribed processing duration of the second device under each of the multiple conditions included in the feedback duration increased by the first duration, and determines the duration value of the target subscribed processing duration increased by the first duration as the value of the second timer.

In some possible implementations, after the first device receives the first information from the second device, the method further includes the following. The first device sends the first request message to the second device and starts the first timer, where the first request message is used for triggering the second device to send a reply message.

Accordingly, after the second device sends the first information to the first device, the method further includes the following. The second device receives the first request message and sends a reply message.

The first request message may carry the identity information of the second device.

Exemplarily, the first device may be a second network device, specifically a second core-network device, and the second device may be a second terminal device. In this case, the first request message may be carried in a NAS message. The reply message may be carried in a NAS message, such as a service request message.

Exemplarily, the first device may be a second access-network device, and the second device may be a second terminal device. In this case, the first request message may be carried in an AS message, for example, carried in one of a broadcast message, a paging message, an RRC message, or the like. The reply message may be carried in an AS message, such as an RRC message, an MAC CE, etc., which will not be enumerated herein.

After the first device starts the first timer, the method may further include the following. When the first timer expires and no reply message is received from the second device, the first device performs one of: sending a second request message to the second device; notifying a fourth device that no reply message is received; determining that the second device is unreachable; or determining that the second device is in an abnormal state. Alternatively, after the first device starts the first timer, the method may further include the following. The first device stops the first timer when the first timer has not expired and the reply message is received from the second device.

That is, the first device can start the first timer when sending the first request message, determine in real time whether a current timing duration of the first timer exceeds the value of the first timer, and determine in real time whether the reply message is received from the second device. If the current timing duration of the first timer does not exceed the value of the first timer and no reply message is received from the second device, then the first device continues to wait for the reply message from the second device. If the current timing duration of the first timer does not exceed the value of the first timer and the reply message is received from the second device, then the first device controls to stop the first timer. If the current timing duration of the first timer exceeds the value of the first timer and no reply message is received from the second device, then the first device determines that the second device is unreachable, or notifies the fourth device that no reply message is received, or determines that the second device is abnormal, or controls to re-send the second request message.

The value of the first timer is determined based on the feedback duration.

In an example, the feedback duration is one of: a subscribed feedback duration of the second device, a subscribed processing duration of the second device increased by a first duration, the subscribed processing duration of the second device, a subscribed feedback duration of the second device under a target condition, a subscribed processing duration of the second device under the target condition increased by the first duration, the subscribed processing duration of the second device under the target condition, a requested feedback duration of the second device, a requested processing duration of the second device increased by the first duration, or the requested processing duration of the second device.

In this example, the value of the first timer is equal to the feedback duration. In other words, the first device directly determines the feedback duration as the value of the first timer.

In another example, the feedback duration is one of: a subscribed processing duration of the second device under each of multiple conditions, the subscribed processing duration of the second device under each of the multiple conditions increased by a first duration, or a subscribed processing duration of the second device under each of the multiple conditions. In this example, the value of the first timer is determined based on the feedback duration and a target condition, where the target condition includes at least one of a target protocol type used by the second device or a target message type used by the second device.

Before sending the first request message this time, the first device can obtain at least the target protocol type and/or the target message type used by the second device. Therefore, the first device can determine from the above feedback duration a duration as the value of the first timer based on the target condition consisting of the target protocol type and/or the target message type. A manner for obtaining by the first device the target protocol type and/or the target message type used by the second device is not limited in this embodiment.

For example, the above feedback duration is the subscribed processing duration of the second device under each of the multiple conditions. Accordingly, the first device may determine the value of the first timer based on the feedback duration as follows. In a case where the first device determines the target protocol type and/or the target message type used by the second device, the first device determines as the target condition the target protocol type and/or the target message type used by the second device, determines from the subscribed feedback duration of the second device under each of the multiple conditions a target subscribed feedback duration based on the target condition, and determines the target subscribed feedback duration as the value of the first timer.

For example, the above feedback duration is the subscribed processing duration of the second device under each of the multiple conditions. Accordingly, the first device may determine the value of the first timer based on the feedback duration as follows. In a case where the first device determines the target protocol type and/or the target message type used by the second device, the first device determines as the target condition the target protocol type and/or the target message type used by the second device, determines from the subscribed processing duration of the second device under each of the multiple conditions a target subscribed processing duration based on the target condition, and determines the target subscribed processing duration as the value of the first timer.

For example, the above feedback duration is the subscribed processing duration of the second device under each of the multiple conditions increased by the first duration. Accordingly, the first device may determine the value of the first timer based on the feedback duration as follows. In a case where the first device determines the target protocol type and/or the target message type used by the second device, the first device determines as the target condition the target protocol type and/or the target message type used by the second device, determines from a duration value of the subscribed processing duration of the second device under each of the multiple conditions increased by the first duration a target duration value based on the target condition, and determines the target duration value as the value of the first timer.

The expiry of the first timer may mean that the current timing duration of the first timer exceeds the value of the first timer.

Specifically, sending the second request message to the second device means that the first device sends the second request message to the second device, where the second request message contains the same content as the first request message. Accordingly, when sending the second request message to the second device, the first device can also start the first timer and perform the same processing as the first request message, which will not be repeated.

The first device notifies the fourth device that no reply message is received, so that the fourth device can know that the second device is in an abnormal state or the second device is unreachable. The fourth device may be one of: a fourth core-network device, a fourth access-network device, or an application server. The fourth core-network device is different from the second core-network device above. Exemplarily, if the second core-network device is an AMF, the fourth core-network device is a core-network device other than an AMF. For example, the fourth core-network device may be any one of a session management function (SMF), a user plane function (UPF), a network element function (NEF), or the like. The application server may be a server used by any one of a third-party application service provider, a service provider, or an operator, etc., related to the second device.

In some possible embodiments, the method may further include the following. The first device receives first indication information, where the first indication information indicates to send the first request message. The first device receiving the first indication information may mean that the first device receives the first indication information from the fourth device. That is, the first device may send the first request message to the second device in a case where the first device needs to obtain the reply message from the second device. Alternatively, the first device may send the first request message to the second device in response to the first indication information sent by the fourth device.

In some possible embodiments, the second device receives the first request message as follows. The second device receives the first request message from the first device. The second device sends the reply message as follows. The second device sends the reply message to the first device. In other words, as long as the second device receives the first request message, the second device can perform processing and then send the reply message to the first device.

Herein, the contents of the reply message and the processing performed by the second device are related to the contents of the first request message. In an example, the second device is an AIoT terminal or an IoT terminal. Specifically, the first request message may be a trigger message, which is used for powering the second device and activating the second device. Accordingly, after receiving the trigger message from the first device, the second device needs to start to harvest energy and drive a logic circuit based on the trigger message, and then send the reply message to the first device. The reply message may carry data reported by the second device, where the data may be data harvested by the second device. Regarding data harvesting of the second device, the time and processing manner thereof are not limited in this embodiment. In another example, the second device is a normal terminal device or a simplified terminal device. The first request message can be used for requesting the second device to reply to certain information or a certain type of information. Accordingly, after receiving the first request message from the first device, the second device needs to perform corresponding processing based on the first request message to obtain information to be sent, and then send the reply message to the first device. The reply message may carry the information to be sent.

In some possible embodiments, the second device receives the first request message and sends the reply message as follows. The second device receives the first request message and starts a second timer. The second device sends the reply message before the second timer expires, where a value of the second timer is determined based on the feedback duration. A manner for determining the value of the second timer has been described in detail in the above embodiment, which will not be repeated.

In this case, the second device also receives the first request message as follows. The second device receives the first request message from the first device. The second device also sends the reply message as follows. The second device sends the reply message to the first device. Different from the above embodiment, in this embodiment, upon reception of the first request message, the second device can control to start the second timer to complete the processing that needs to be performed by the second device and send the reply message to the first device before the second timer expires.

For example, the first device is an AMF, and the second device is a second terminal device (the second terminal device may be any one of an AIoT terminal, an IoT terminal, a normal terminal device, a simplified terminal device (or referred to as a low-capability terminal), or an ordinary terminal with energy saving requirements), based on which an exemplary description of the solution provided in the above implementation will be given with reference to FIG. 6.

At S601, the second terminal device sends a registration request message to the AMF, where the registration request message carries first information, and the first information includes at least one of: identity information of the second terminal device, a device type of the second terminal device, a capability parameter of the second terminal device, or information related to a requested duration of the second terminal device. The information related to the requested duration of the second terminal device may include a requested processing duration of the second terminal device and/or a requested feedback duration of the second terminal device.

The first information has been described in detail in the above embodiment, which will not be repeated.

At S602, after receiving the registration request message, the AMF interacts with a storage unit to obtain a subscription-related duration of the second terminal device based on the identity information of the second terminal device. The subscription-related duration of the second terminal device includes a subscribed processing duration of the second terminal device and/or a subscribed feedback duration of the second terminal device.

Obtaining the subscription-related duration of the second terminal device based on the identity information of the second terminal device may be merely an exemplary implementation. In actual processing, the subscription-related duration of the second terminal device may also be obtained based on at least one of the identity information of the second terminal device, the device type of the second terminal device, or the capability parameter of the second terminal device.

The description of the subscription-related duration of the second terminal device is the same as the description of the subscription-related duration of the second device above, which will not be repeated.

At S603, the AMF determines a feedback duration and sends the feedback duration to the second terminal device, where the feedback duration is carried in a registration reply message.

In a case, before operations at S602 above, the following may be further included. After the AMF receives the registration request message, if the first information in the registration request message does not include any one of the identity information of the second terminal device, the device type of the second terminal device, or the capability parameter of the second terminal device and includes the information related to the requested duration of the second terminal device, the AMF may not perform the operations at S602 and may directly perform operations at S603. In this case, the operations at S603 may include the AMF determining the feedback duration according to the information related to the requested duration of the second terminal device. A manner for determining the feedback duration is the same as that in the above embodiment, which will not be repeated.

In another case, before operations at S602 above, the following may be further included. After the AMF receives the registration request message, if the first information in the registration request message includes at least one of the identity information of the second terminal device, the device type of the second terminal device, or the capability parameter of the second terminal device and includes the information related to the requested duration of the second terminal device, the AMF queries based on at least one of the identity information of the second terminal device, the device type of the second terminal device, or the capability parameter of the second terminal device whether the storage unit stores the subscription-related duration of the second terminal device. If the storage unit stores no subscription-related duration of the second terminal device, the AMF does not perform the operations at S602 and directly performs operations at S603. In this case, the operations at S603 may include the AMF determining the feedback duration according to the information related to the requested duration of the second terminal device, which will not be repeated.

In another case, before operations at S602 above, the following may be further included. After the AMF receives the registration request message, if the first information in the registration request message includes at least one of the identity information of the second terminal device, the device type of the second terminal device, or the capability parameter of the second terminal device, the AMF queries based on at least one of the identity information of the second terminal device, the device type of the second terminal device, or the capability parameter of the second terminal device whether the storage unit stores the subscription-related duration of the second terminal device. If the storage unit stores the subscription-related duration of the second terminal device, the AMF performs the operations at S602 and S603. In this case, the operations at S603 may include the AMF determining the feedback duration according to the subscription-related duration of the second terminal device. A specific manner for determining the feedback duration is the same as that in the above embodiment, which will not be repeated. In this case, regardless of whether the first information includes the information related to the requested duration of the second terminal device, the feedback duration is determined based on the subscription-related duration of the second terminal device.

After the above processing is completed, operations at S604 and S605 can be performed.

At S604, the AMF sends a first request message to the second terminal device and starts a first timer, where the first request message is carried in a NAS message.

The first request message may carry the identity information of the second terminal device to obtain a reply message from the second terminal device. The NAS message may be a downlink NAS message.

A value of the first timer is determined based on the feedback duration. The specific determination manner has been described in detail in the above embodiment, which will not be repeated.

At S605, the AMF receives a reply message from the second terminal device, where the reply message is carried in a NAS message.

It may also be noted that for the operations at S604 and S605, after completion of the operations at S604, the AMF can determine in real time whether a current timing duration of the first timer exceeds the value of the first timer, and determine in real time whether the reply message is received from the second terminal device. If the current timing duration of the first timer does not exceed the value of the first timer and no reply message is received from the second terminal device, then the AMF continues to wait for the reply message from the second terminal device. If the current timing duration of the first timer does not exceed the value of the first timer and the operations at S605 are performed, i.e., the reply message is received from the second terminal device, then the AMF controls to stop the first timer. If the current timing duration of the first timer exceeds the value of the first timer, i.e., the first timer expires, and no reply message is received from the second terminal device, then the AMF determines that the second terminal device is unreachable, or determines that the second terminal device is abnormal, or controls to re-send a second request message to the second terminal device.

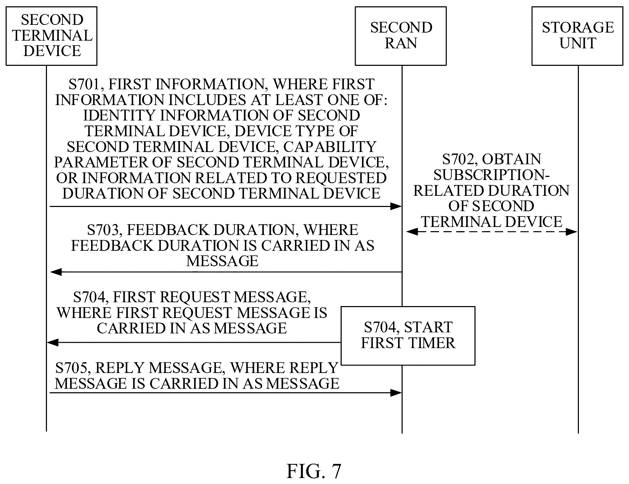

For example, the first device is a second RAN device (referred to as a second RAN for short), and the second device as a second terminal device (the second terminal device may be any one of an AIoT terminal, an IoT terminal, a normal terminal device, a simplified terminal device (or referred to as a low-capability terminal), or an ordinary terminal with energy saving requirements), based on which another exemplary description of the solution provided in the above implementation will be given with reference to FIG. 7.

At S701, the second terminal device sends first information to the second RAN, where the first information includes at least one of: identity information of the second terminal device, a device type of the second terminal device, a capability parameter of the second terminal device, or information related to a requested duration of the second terminal device. The information related to the requested duration of the second terminal device may include a requested processing duration of the second terminal device and/or a requested feedback duration of the second terminal device.

The first information is carried in an AS message. Exemplarily, the AS message may be any one of an RRC message, a PDCP layer message, an RLC layer message, an MAC layer message, a PHY layer message, or a message of a newly-designed new AS protocol layer.

At S702, after receiving the first information, the second RAN interacts with a storage unit to obtain a subscription-related duration of the second terminal device based on the identity information of the second terminal device. The subscription-related duration of the second terminal device includes a subscribed processing duration of the second terminal device and/or a subscribed feedback duration of the second terminal device.

The second RAN can directly obtain the subscription-related duration of the second terminal device from a storage network element through a N2 interface, or can interact with the AMF to obtain the subscription-related duration of the second terminal device from the storage network element.

Obtaining the subscription-related duration of the second terminal device based on the identity information of the second terminal device may be merely an exemplary implementation. In actual processing, the subscription-related duration of the second terminal device may also be obtained based on at least one of the identity information of the second terminal device, the device type of the second terminal device, or the capability parameter of the second terminal device. The description of the subscription-related duration of the second terminal device is the same as the description of the subscription-related duration of the second device above, which will not be repeated.

At S703, the second RAN determines a feedback duration and sends the feedback duration to the second terminal device, where the feedback duration is carried in an AS message.

In a case, before operations at S702 above, the following may be further included. After the second RAN receives the first information, if the first information does not include any one of the identity information of the second terminal device, the device type of the second terminal device, or the capability parameter of the second terminal device and includes the information related to the requested duration of the second terminal device, the second RAN may not perform the operations at S702 and may directly perform operations at S703. In this case, the operations at S703 may include the second RAN determining the feedback duration according to the information related to the requested duration of the second terminal device, which will not be repeated.

In another case, before operations at S702 above, the following may be further included. After the second RAN receives the first information, if the first information includes at least one of the identity information of the second terminal device, the device type of the second terminal device, or the capability parameter of the second terminal device and includes the information related to the requested duration of the second terminal device, the second RAN queries based on at least one of the identity information of the second terminal device, the device type of the second terminal device, or the capability parameter of the second terminal device whether the storage unit stores the subscription-related duration of the second terminal device. If the storage unit stores no subscription-related duration of the second terminal device, the second RAN does not perform the operations at S702 and directly performs operations at S703. In this case, the operations at S703 may include the second RAN determining the feedback duration according to the information related to the requested duration of the second terminal device, which will not be repeated.

In another case, before operations at S702 above, the following may be further included. After the second RAN receives the first information, if the first information includes at least one of the identity information of the second terminal device, the device type of the second terminal device, or the capability parameter of the second terminal device, the second RAN queries based on at least one of the identity information of the second terminal device, the device type of the second terminal device, or the capability parameter of the second terminal device whether the storage unit stores the subscription-related duration of the second terminal device. If the storage unit stores the subscription-related duration of the second terminal device, the second RAN performs the operations at S702 and S703. In this case, the operations at S703 may include the second RAN determining the feedback duration according to the subscription-related duration of the second terminal device. A specific manner for determining the feedback duration is the same as that in the above embodiment, which will not be repeated.

After the above processing is completed, operations at S704 and S705 can be performed.

At S704, the second RAN sends a first request message to the second terminal device and starts a first timer, where the first request message is carried in an AS message.

The first request message may carry the identity information of the second terminal device to obtain a reply message from the second terminal device. The first request message may be any one of AS messages such as a paging message, a broadcast message, or an RRC message.

A value of the first timer is determined based on the feedback duration. The specific determination manner has been described in detail in the above embodiment, which will not be repeated.

At S705, the second RAN receives a reply message from the second terminal device, where the reply message is carried in an AS message.

It may also be noted that for the operations at S704 and S705, after completion of the operations at S704, the second RAN can determine in real time whether a current timing duration of the first timer exceeds the value of the first timer, and determine in real time whether the reply message is received from the second terminal device. If the current timing duration of the first timer does not exceed the value of the first timer and no reply message is received from the second terminal device, then the second RAN continues to wait for the reply message from the second terminal device. If the current timing duration of the first timer does not exceed the value of the first timer and the operations at S705 are performed, i.e., the reply message is received from the second terminal device, then the second RAN controls to stop the first timer. If the current timing duration of the first timer exceeds the value of the first timer, i.e., the first timer expires, and no reply message is received from the second terminal device, then the second RAN determines that the second terminal device is unreachable, or notifies a fourth device that no reply message is received, or determines that the second terminal device is abnormal, or controls to re-send a second request message to the second terminal device.

In some possible implementations, after the first device receives the first information from the second device, the method further includes the following. The first device indicates a third device to send the first request message to the second device and starts the first timer, where the first request message is used for triggering the second device to send a reply message.

Accordingly, after the second device sends the first information to the first device, the method further includes the following. The second device receives the first request message and sends a reply message.

The third device is one of: a first network device or a first terminal device. The first network device may be a first access-network device or a first RAN device (referred to as a first RAN for short). The first terminal device may be a terminal device with a sidelink communication capability. The difference between this implementation and the above implementation lies in that this implementation and the above implementation are used in different scenarios. In this implementation, a device for sending the first request message may be different from a device for receiving the reply message.

In this implementation, the related description of the first request message is the same as that in the above embodiment, which will not be repeated.

The first device may be a second network device, specifically a second core-network device, the second device may be a second terminal device, and the third device may be a first access-network device. In this case, the first request message above may be carried in an AS message. Exemplarily, the first request message may be carried in one of: a broadcast message, a paging message, an RRC message, or the like. The reply message may be carried in a NAS message, such as a service request message.

Alternatively, the first device may be a second network device, specifically a second access-network device, the second device may be a second terminal device, and the third device may be a first terminal device. In this case, the first request message above may be carried in a sidelink message. The reply message may be carried in an AS message, such as an RRC message and an MAC CE, which will not be enumerated herein.

In this implementation, after the first device starts the first timer, the method further includes the following. When the first timer expires and no reply message is received from the second device, the first device performs one of: sending a second request message to the second device; notifying a fourth device that no reply message is received; determining that the second device is unreachable; or determining that the second device is in an abnormal state. Alternatively, after the first device starts the first timer, the method further includes the following. The first device stops the first timer when the first timer has not expired and the reply message is received from the second device.

Specifically, sending the second request message to the second device may mean that the first device indicates the third device to send the second request message to the second device. The second request message may contain the same content as the first request message. In addition, when the first device indicates the third device to send the second request message to the second device, the first device can simultaneously start the first timer and perform the same processing as above, which will not be repeated.

The specific description of a manner for determining the value of the first timer, the fourth device, and the like is the same as that in the above embodiment, which will not be repeated.

In some examples, the method may further include the following. The first device receives first indication information, where the first indication information indicates to send the first request message. The specific description of the first indication information is also the same as that in the above embodiment, which will not be repeated.

Optionally, the second device receives the first request message as follows. The second device receives the first request message from the third device. The second device sends the reply message as follows. The second device sends the reply message to the first device. That is, when the second device receives the first request message from the third device, the second device can perform processing and then send the reply message to the first device. Herein, the contents of the reply message and the processing performed by the second device are related to the contents of the first request message. The description of the contents of the reply message and the processing performed by the second device is the same as that in the above embodiment, which will not be repeated.

Optionally, the second device receives the first request message and sends the reply message as follows. The second device receives the first request message and starts a second timer. The second device sends the reply message before the second timer expires, where a value of the second timer is determined based on the feedback duration. A manner for determining the value of the second timer has been described in detail in the above embodiment, which will not be repeated.

In this case, the second device also receives the first request message as follows. The second device receives the first request message from the third device. The second device also sends the reply message as follows. The second device sends the reply message to the first device. Different from the above embodiment, in this embodiment, upon reception of the first request message, the second device can control to start the second timer to complete the processing that needs to be performed by the second device and send the reply message to the first device before the second timer expires.

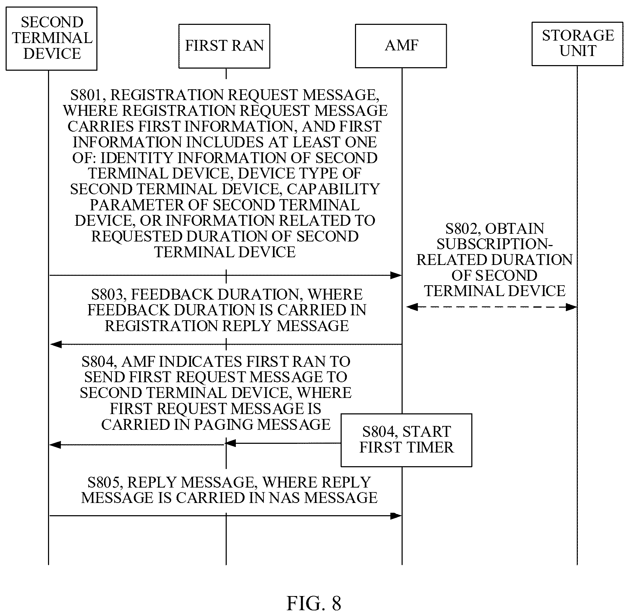

For example, the first device is an AMF, the second device is a second terminal device (the second terminal device may be any one of an AIoT terminal, an IoT terminal, a normal terminal device, a simplified terminal device (or referred to as a low-capability terminal), or an ordinary terminal with energy saving requirements), and the third device is a first RAN device (referred to as a first RAN for short), based on which another exemplary description of the above implementation will be given with reference to FIG. 8.

At S801, the second terminal device sends a registration request message to the AMF, where the registration request message carries first information, and the first information includes at least one of: identity information of the second terminal device, a device type of the second terminal device, a capability parameter of the second terminal device, or information related to a requested duration of the second terminal device. The information related to the requested duration of the second terminal device may include a requested processing duration of the second terminal device and/or a requested feedback duration of the second terminal device.

At S802, after receiving the registration request message, the AMF interacts with a storage unit to obtain a subscription-related duration of the second terminal device based on the identity information of the second terminal device. The subscription-related duration of the second terminal device includes a subscribed processing duration of the second terminal device and/or a subscribed feedback duration of the second terminal device.

At S803, the AMF determines a feedback duration and sends the feedback duration to the second terminal device, where the feedback duration is carried in a registration reply message.

The detailed description of operations at S801 to S803 above is the same as the detailed description of the operations at S601 to S603 above, which will not be repeated.

After the above processing is completed, operations at S804 and S805 can be performed.

At S804, the AMF indicates the first RAN to send a first request message to the second terminal device and starts a first timer, where the first request message is carried in a paging message.

The first request message may carry the identity information of the second terminal device to obtain a reply message from the second terminal device. FIG. 8 illustrates an example in which the first RAN carries the first request message via the paging message. It may be understood that in actual processing, the first request message may be carried in other messages such as a broadcast message, an RRC message, etc., which is not illustrated in FIG. 8 for the sake of simplicity.

A value of the first timer is determined based on the feedback duration. The specific determination manner has been described in detail in the above embodiment, which will not be repeated.

At S805, the AMF receives a reply message from the second terminal device, where the reply message is carried in a NAS message, such as a service request message.

It may also be noted that for the operations at S804 and S805, after completion of the operations at S804, the AMF can determine in real time whether a current timing duration of the first timer exceeds the value of the first timer, and determine in real time whether the reply message is received from the second terminal device. If the current timing duration of the first timer does not exceed the value of the first timer and no reply message is received from the second terminal device, then the AMF continues to wait for the reply message from the second terminal device. If the current timing duration of the first timer does not exceed the value of the first timer and the operations at S805 are performed, i.e., the reply message is received from the second terminal device, then the AMF controls to stop the first timer. If the current timing duration of the first timer exceeds the value of the first timer, i.e., the first timer expires, and no reply message is received from the second terminal device, then the AMF determines that the second terminal device is unreachable, or notifies a fourth device that no reply message is received, or determines that the second terminal device is abnormal, or controls to re-send a second request message to the second terminal device.

In some possible implementations, after the first device receives the first information from the second device, the method further includes the following. The first device sends third information to a third device, where the third information carries the feedback duration.

In this implementation, the feedback duration is also used for determining the value of the first timer. The difference between this implementation and the above implementation lies in that in this implementation, the value of the first timer can be determined by the third device based on the feedback duration. The determination of the value of the first timer based on the feedback duration by the third device is the same as the determination of the value of the first timer based on the feedback duration by the first device, which will not be repeated.

Accordingly, the processing performed by the third device may further include the following. The third device sends the first request message to the second device and starts the first timer, where the first request message is used for triggering the second device to send a reply message.

After the second device sends the first information to the first device, the method further includes the following. The second device receives the first request message and sends a reply message.

The third device is one of: a first network device or a first terminal device, which will not be repeated. In this implementation, the related description of the first request message is the same as that in the above embodiment, which will not be repeated.

Exemplarily, the first device above may be a second network device, specifically a second core-network device, the second device may be a second terminal device, and the third device may be a first access-network device. In this case, the first request message above may be carried in an AS message. Exemplarily, the first request message may be carried in one of: a broadcast message, a paging message, an RRC message, or the like. The reply message may be carried in an AS message, such as an RRC message and an MAC CE, which will not be enumerated herein.

Exemplarily, the first device may be a second network device, the second device may be a second terminal device, and the third device may be a first terminal device. In this case, the first request message may be carried in a sidelink message, and the reply message may also be carried in a sidelink message.

The difference between this implementation and the above implementation lies in that in this implementation, a device for determining the feedback duration is different from a device for sending the first request message and receiving the reply message.

In this implementation, after the third device starts the first timer, the method further includes the following. When the first timer expires and no reply message is received from the second device, the third device performs one of: sending a second request message to the second device; notifying a fourth device that no reply message is received; determining that the second device is unreachable; or determining that the second device is in an abnormal state. Alternatively, after the third device starts the first timer, the method further includes the following. The third device stops the first timer when the first timer has not expired and the reply message is received from the second device. The specific description thereof is the same as that in the above embodiment, which will not be repeated.

Specifically, sending the second request message to the second device may mean that the third device sends the second request message to the second device. The second request message may contain the same content as the first request message. In addition, when the third device sends the second request message to the second device, the third device can simultaneously start the first timer and perform the same processing as above, which will not be repeated.

Optionally, the second device receives the first request message as follows. The second device receives the first request message from the third device. The second device sends the reply message as follows. The second device sends the reply message to the third device. That is, when the second device receives the first request message from the third device, the second device can perform processing and then send the reply message to the third device.

Herein, the contents of the reply message and the processing performed by the second device are related to the contents of the first request message. The description of the contents of the reply message and the processing performed by the second device is the same as that in the above embodiment, which will not be repeated.

Optionally, the second device receives the first request message and sends the reply message as follows. The second device receives the first request message and starts a second timer. The second device sends the reply message before the second timer expires, where a value of the second timer is determined based on the feedback duration. A manner for determining the value of the second timer has been described in detail in the above embodiment, which will not be repeated.

It may be noted that in this implementation, although the third device sends the first request message to the second device and receives the reply message from the second device, in some possible examples, in a case where the reply message is received by the third device from the second device, the third device can also report to the first device the reply message sent by the second device. The possible subsequent processing will not be enumerated in this embodiment.

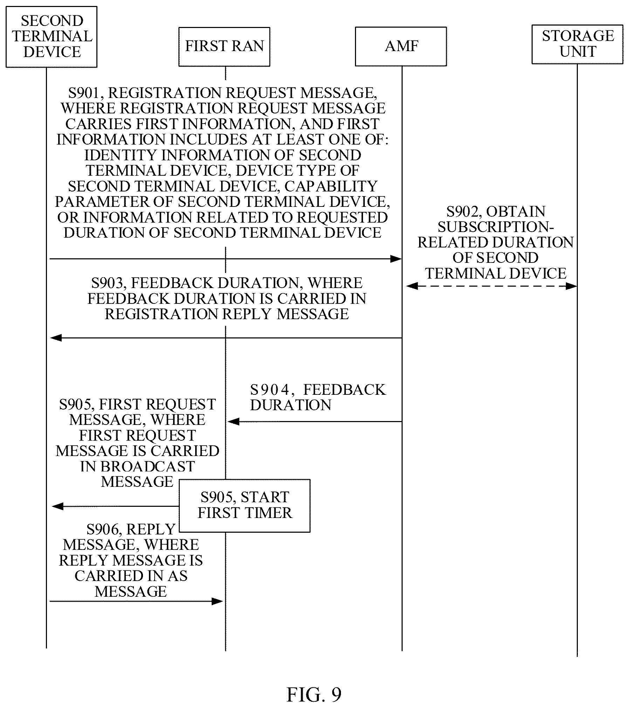

For example, the first device is an AMF, the second device is a second terminal device (the second terminal device may be any one of an AIoT terminal, an IoT terminal, a normal terminal device, a simplified terminal device (or referred to as a low-capability terminal), or an ordinary terminal with energy saving requirements), and the third device is a first RAN device (referred to as a first RAN for short), based on which an exemplary description of the above embodiment will be given with reference to FIG. 9.

At S901, the second terminal device sends a registration request message to the AMF, where the registration request message carries first information, and the first information includes at least one of: identity information of the second terminal device, a device type of the second terminal device, a capability parameter of the second terminal device, or information related to a requested duration of the second terminal device. The information related to the requested duration of the second terminal device may include a requested processing duration of the second terminal device and/or a requested feedback duration of the second terminal device.

At S902, after receiving the registration request message, the AMF interacts with a storage unit to obtain a subscription-related duration of the second terminal device based on the identity information of the second terminal device. The subscription-related duration of the second terminal device includes a subscribed processing duration of the second terminal device and/or a subscribed feedback duration of the second terminal device.

At S903, the AMF determines a feedback duration and sends the feedback duration to the second terminal device, where the feedback duration is carried in a registration reply message.

The detailed description of operations at S901 to S903 above is the same as the detailed description of the operations at S601 to S603 above, which will not be repeated.

At S904, the AMF sends the feedback duration to a first RAN. Herein, operations at S904 and S903 may be performed simultaneously, or the operations at S904 may be performed after the operations at S903.

After the above processing is completed, operations at S905 and S906 can be performed.

At S905, the first RAN sends a first request message to the second terminal device and starts a first timer, where the first request message is carried in a broadcast message.

The first request message may carry the identity information of the second terminal device to obtain a reply message from the second terminal device. FIG. 9 illustrates an example in which the first RAN carries the first request message via the broadcast message. It may be understood that in actual processing, the first request message may be carried in other messages such as a paging message, an RRC message, etc., which is not illustrated in FIG. 9 for the sake of simplicity.

A value of the first timer is determined based on the feedback duration. The specific determination manner has been described in detail in the above embodiment, which will not be repeated.

At S906, the first RAN receives a reply message from the second terminal device, where the reply message is carried in an AS message.

It may be understood that, the first RAN may further report to the AMF the reply message sent by the second terminal device, which is not limited in this embodiment.

It may also be noted that for the operations at S905 and S906, after completion of the operations at S905, the first RAN can determine in real time whether a current timing duration of the first timer exceeds the value of the first timer, and determine in real time whether the reply message is received from the second terminal device. If the current timing duration of the first timer does not exceed the value of the first timer and no reply message is received from the second terminal device, then the first RAN continues to wait for the reply message from the second terminal device. If the current timing duration of the first timer does not exceed the value of the first timer and the operations at S906 are performed, i.e., the reply message is received from the second terminal device, then the first RAN controls to stop the first timer. If the current timing duration of the first timer exceeds the value of the first timer, i.e., the first timer expires, and no reply message is received from the second terminal device, then the first RAN determines that the second terminal device is unreachable, or notifies a fourth device that no reply message is received, or determines that the second terminal device is abnormal, or controls to re-send a second request message to the second terminal device.

The above implementations are all described in a scenario where the first device receives the first information from the second device.

In some other possible implementations, the first device receiving the first information may mean that the first device receives the first information from a fifth device.

Optionally, the first information may be carried in a message for registration of the second device. For example, the fifth device is an application server. When the application server needs to register the second device, the application server may send the message for registration of the second device to the first device and carry the first information in the message for registration of the second device.

Optionally, the first information may be carried in second indication information, and the second indication information indicates the first device to send the first request message. For example, the fifth device is an application server. When the application server needs to obtain reply information from the second device, the application server sends the second indication information to the first device, where the second indication information indicates the first device to send the first request message, and the second indication information carries the first information. In this case, the first device first determines the feedback duration based on the first information, and then sends the first request message to the second device.

In this implementation, except that the first information is sent by the fifth device, the specific content of the first information, a manner for determining the feedback duration by the first device, a manner for determining the value of the first timer based on the feedback duration, sending the first request message, starting the first timer, receiving the reply message by the first device, and the specific processing performed by the second device are all the same as those in the above implementation and thus will not be repeated.

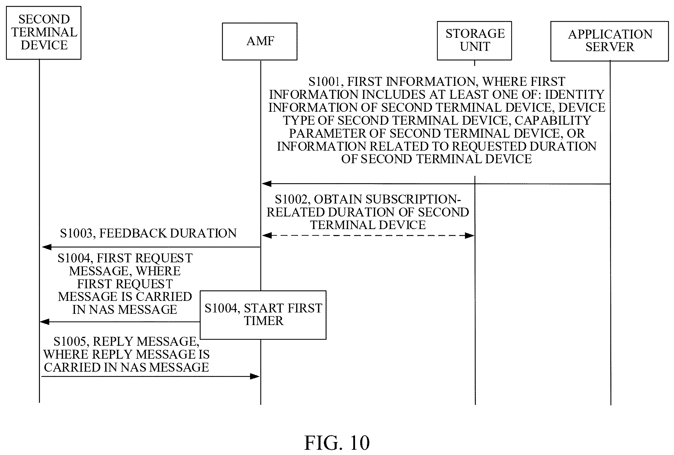

For example, the first device is an AMF, the second device is a second terminal device (the second terminal device may be any one of an AIoT terminal, an IoT terminal, a normal terminal device, a simplified terminal device (or referred to as a low-capability terminal), or an ordinary terminal with energy saving requirements), and the fifth device is an application server, based on which an exemplary description of the solution provided in the above implementation will be given with reference to FIG. 10.

At S1001, the application server sends first information to the AMF, where the first information includes at least one of: identity information of the second terminal device, a device type of the second terminal device, a capability parameter of the second terminal device, or information related to a requested duration of the second terminal device. The information related to the requested duration of the second terminal device may include a requested processing duration of the second terminal device and/or a requested feedback duration of the second terminal device.

The first information may be carried in a message for registration of the second terminal device. The detailed description of the first information is the same as that in the above embodiment, which will not be repeated.

At S1002, after receiving the first information, the AMF interacts with a storage unit to obtain a subscription-related duration of the second terminal device based on the identity information of the second terminal device. The subscription-related duration of the second terminal device includes a subscribed processing duration of the second terminal device and/or a subscribed feedback duration of the second terminal device.

At S1003, the AMF determines a feedback duration and sends the feedback duration to the second terminal device

In a case, before operations at S1002 above, the following may be further included. If the first information does not include any one of the identity information of the second terminal device, the device type of the second terminal device, or the capability parameter of the second terminal device and includes the information related to the requested duration of the second terminal device, the AMF may not perform the operations at S1002 and may directly perform operations at S1003. In this case, the operations at S1003 may include the AMF determining the feedback duration according to the information related to the requested duration of the second terminal device. A manner for determining the feedback duration is the same as that in the above embodiment, which will not be repeated.

In another case, before operations at S1002 above, the following may be further included. If the first information includes at least one of the identity information of the second terminal device, the device type of the second terminal device, or the capability parameter of the second terminal device and includes the information related to the requested duration of the second terminal device, the AMF queries based on at least one of the identity information of the second terminal device, the device type of the second terminal device, or the capability parameter of the second terminal device whether the storage unit stores the subscription-related duration of the second terminal device. If the storage unit stores no subscription-related duration of the second terminal device, the AMF does not perform the operations at S1002 and directly performs operations at S1003. In this case, the operations at S1003 may include the AMF determining the feedback duration according to the information related to the requested duration of the second terminal device, which will not be repeated.

In another case, before operations at S1002 above, the following may be further included. If the first information includes at least one of the identity information of the second terminal device, the device type of the second terminal device, or the capability parameter of the second terminal device, the AMF queries based on at least one of the identity information of the second terminal device, the device type of the second terminal device, or the capability parameter of the second terminal device whether the storage unit stores the subscription-related duration of the second terminal device. If the storage unit stores the subscription-related duration of the second terminal device, the AMF performs the operations at S1002 and S 1003. In this case, the operations at S1003 may include the AMF determining the feedback duration according to the subscription-related duration of the second terminal device. A specific manner for determining the feedback duration is the same as that in the above embodiment, which will not be repeated. In this case, regardless of whether the first information includes the information related to the requested duration of the second terminal device, the feedback duration is determined based on the subscription-related duration of the second terminal device.

After the above processing is completed, operations at S1004 and S1005 can be performed.

At S1004, the AMF sends a first request message to the second terminal device and starts a first timer, where the first request message is carried in a NAS message.

At S1005, the AMF receives a reply message from the second terminal device, where the reply message is carried in a NAS message.

The detailed description of the operations at S1004 and S1005 is the same as the detailed description of the operations at S604 and S605 in the above example, which will not be repeated.

It may be noted that, the "AMF" in the operations at S1001 to S1005 above can also be replaced with the "second RAN", and the other processing procedures are the same as the operations at S1001 to S1005 above, which will not be repeated.

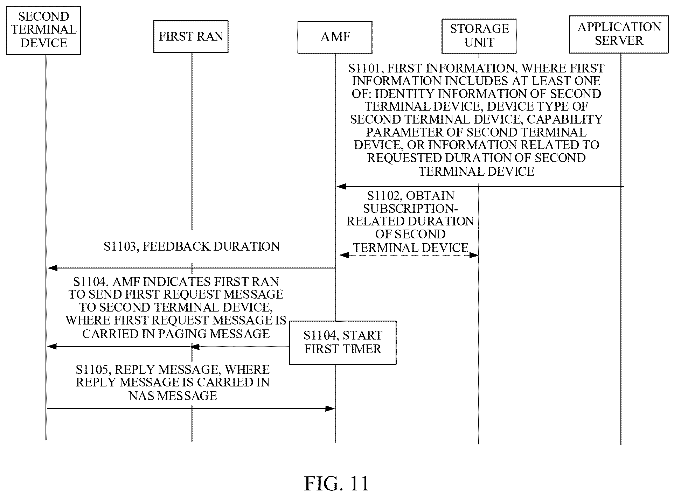

For example, the first device is an AMF, the second device is a second terminal device (the second terminal device may be any one of an AIoT terminal, an IoT terminal, a normal terminal device, a simplified terminal device (or referred to as a low-capability terminal), or an ordinary terminal with energy saving requirements), the third device is a first RAN device (referred to as a first RAN for short), and the fifth device is an application server, based on which another exemplary description of the above implementation will be given with reference to FIG. 11.

At S1101, the application server sends first information to the AMF, where the first information includes at least one of: identity information of the second terminal device, a device type of the second terminal device, a capability parameter of the second terminal device, or information related to a requested duration of the second terminal device. The information related to the requested duration of the second terminal device may include a requested processing duration of the second terminal device and/or a requested feedback duration of the second terminal device.

At S1102, after receiving the first information, the AMF interacts with a storage unit to obtain a subscription-related duration of the second terminal device based on the identity information of the second terminal device. The subscription-related duration of the second terminal device includes a subscribed processing duration of the second terminal device and/or a subscribed feedback duration of the second terminal device.

At S1103, the AMF determines a feedback duration and sends the feedback duration to the second terminal device.

The detailed description of operations at S1101 to S1103 is the same as the detailed description of the operations at S1001 to S1003 above, which will not be repeated.

After the above processing is completed, operations at S1104 and S1105 can be performed.

At S1104, the AMF indicates the first RAN to send a first request message to the second terminal device and starts a first timer, where the first request message is carried in a paging message.

At S1105, the AMF receives a reply message from the second terminal device, where the reply message is carried in a NAS message, such as a service request message.

The detailed description of the operations at S1104 and S1105 is the same as the detailed description of the operations at S804 and S805 in FIG. 8 in the above embodiment, which will not be repeated.

It may be understood that, the "AMF" in FIG. 11 can be replaced with the "second RAN" and/or the "first RAN" can be replaced with the "first terminal device", and the specific processing is similar to the operations at S1101 to S1105 above, which will not be repeated.

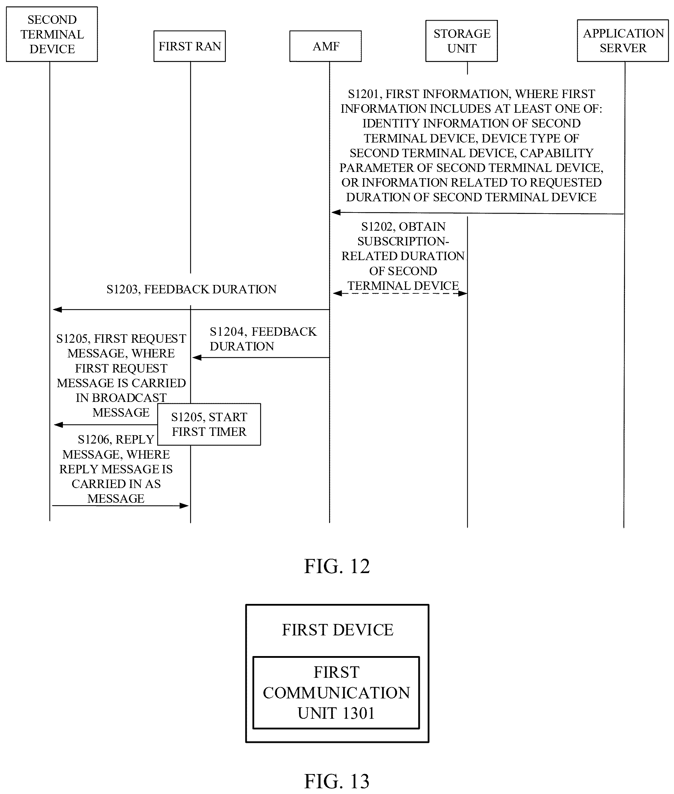

For example, the first device is an AMF, the second device is a second terminal device (the second terminal device may be any one of an AIoT terminal, an IoT terminal, a normal terminal device, a simplified terminal device (or referred to as a low-capability terminal), or an ordinary terminal with energy saving requirements), the third device is a first RAN device (referred to as a first RAN for short), and the fifth device is an application server, based on which an exemplary description of the above embodiment will be given with reference to FIG. 12.

At S1201, the application server sends first information to the AMF, where the first information includes at least one of: identity information of the second terminal device, a device type of the second terminal device, a capability parameter of the second terminal device, or information related to a requested duration of the second terminal device. The information related to the requested duration of the second terminal device may include a requested processing duration of the second terminal device and/or a requested feedback duration of the second terminal device.

At S1202, the AMF interacts with a storage unit to obtain a subscription-related duration of the second terminal device based on the identity information of the second terminal device. The subscription-related duration of the second terminal device includes a subscribed processing duration of the second terminal device and/or a subscribed feedback duration of the second terminal device.

At S1203, the AMF determines a feedback duration and sends the feedback duration to the second terminal device.

The detailed description of operations at S1201 to S 1203 is the same as the detailed description of the operations at S1001 to S1003 above, which will not be repeated.

At S1204, the AMF sends the feedback duration to a first RAN. Herein, operations at S1204 and S1203 may be performed simultaneously, or the operations at S1204 may be performed after the operations at S1203.

After the above processing is completed, operations at S1205 and S1206 can be performed.

At S1205, the first RAN sends a first request message to the second terminal device and starts a first timer, where the first request message is carried in a broadcast message.

At S1206, the first RAN receives a reply message from the second terminal device, where the reply message is carried in an AS message. It may be understood that, the first RAN may further report to the AMF the reply message sent by the second terminal device, which is not limited in this embodiment.

The specific processing of the operations at S1205 and S1206 is the same as the specific processing of the operations at S905 and S906 above, which will not be repeated.

As can be seen, by using the above solution, the first device can obtain first information and then can determine a feedback duration according to the first information, where the feedback duration is used for determining a value of a first timer, and the first timer is started when a first request message is sent. As such, through interaction of the first information, the first device can determine the value of the first timer. Therefore, when the first request message is sent, a duration for waiting for a reply message can be maintained by using the first timer, thereby preventing erroneous determination that a peer end is unable to reply.

Further, since the above solution can be implemented with minor changes to the existing architecture and procedure, excessive impact on the terminal side is also avoided, which facilitates effective information collection and management of terminals in large-scale, wide-coverage, temporally or geographically non-continuous scenarios.

FIG. 13 is a schematic diagram of a structure of a first device according to an embodiment of the disclosure. The first device includes a first communication unit 1301. The first communication unit 1301 is configured to receive first information. The first information is used for determining a feedback duration. The feedback duration is used for determining a value of a first timer. The first timer is started when a first request message is sent.

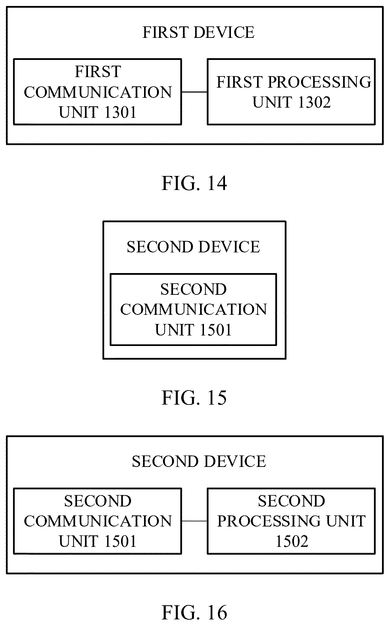

Based on FIG. 13, as illustrated in FIG. 14, the first device further includes a first processing unit 1302 and the first communication unit 1301. The first processing unit 1302 is configured to start the first timer when the first communication unit 1301 sends the first request message to a second device. The first communication unit 1301 is configured to send the first request message to the second device, where the first request message is used for triggering the second device to send a reply message.

A first processing unit is configured to start the first timer when a third device is indicated to send the first request message to a second device. The first communication unit is configured to indicate the third device to send the first request message to the second device, where the first request message is used for triggering the second device to send a reply message.

The first processing unit is configured to, after starting the first timer, when the first timer expires and the first communication unit receives no reply message from the second device, perform one of: sending a second request message to the second device through the first communication unit; notifying through the first communication unit a fourth device that no reply message is received; determining that the second device is unreachable; or determining that the second device is in an abnormal state.

The first processing unit is configured to, after starting the first timer, stop the first timer when the first timer has not expired and the first communication unit receives the reply message from the second device.

The first communication unit is configured to receive first indication information, where the first indication information indicates to send the first request message.

The first information carries at least one of: information related to a second device or information related to a requested duration of the second device.

The information related to the second device includes at least one of: identity information of the second device, a device type of the second device, or a capability parameter of the second device.

The information related to the requested duration of the second device includes at least one of: a requested processing duration of the second device or a requested feedback duration of the second device. The requested feedback duration of the second device is longer than the requested processing duration of the second device.

The first information carries the information related to the second device, the feedback duration is determined based on a subscription-related duration of the second device, and the subscription-related duration of the second device is determined based on the information related to the second device.

The subscription-related duration of the second device includes at least one of: a subscribed processing duration of the second device or a subscribed feedback duration of the second device. The subscribed feedback duration of the second device is longer than the subscribed processing duration of the second device.

When the subscription-related duration of the second device includes the subscribed feedback duration of the second device, the feedback duration is the subscribed feedback duration of the second device.

When the subscription-related duration of the second device includes the subscribed processing duration of the second device and does not include the subscribed feedback duration of the second device, the feedback duration is one of: the subscribed processing duration of the second device increased by a first duration; or the subscribed processing duration of the second device.

The subscription-related duration of the second device includes at least one of: multiple subscribed processing durations of the second device or multiple subscribed feedback durations of the second device.

The multiple subscribed feedback durations of the second device include a subscribed feedback duration of the second device under each of multiple conditions.

The multiple subscribed processing durations of the second device include a subscribed processing duration of the second device under each of multiple conditions.

Different conditions among the multiple conditions correspond to different protocol types and/or different message types.

When the subscription-related duration of the second device includes the multiple subscribed processing durations of the second device, the feedback duration includes the multiple subscribed processing durations of the second device.

When the subscription-related duration of the second device includes the multiple subscribed processing durations of the second device and does not include the multiple subscribed feedback durations of the second device, the feedback duration includes one of: the multiple subscribed processing durations of the second device each increased by a first duration; or the multiple subscribed processing durations of the second device.

The value of the first timer is determined based on the feedback duration and a target condition. The target condition includes at least one of: a target protocol type used by the second device or a target message type used by the second device.

When the subscription-related duration of the second device includes the multiple subscribed processing durations of the second device, the feedback duration is a subscribed feedback duration of the second device under a target condition. The target condition includes at least one of: a target protocol type used by the second device or a target message type used by the second device.

When the subscription-related duration of the second device includes the multiple subscribed processing durations of the second device and does not include the multiple subscribed feedback durations of the second device, the feedback duration is one of: a subscribed processing duration of the second device under a target condition increased by a first duration; or the subscribed processing duration of the second device under the target condition. The target condition includes at least one of: a target protocol type used by the second device or a target message type used by the second device.

When the first information carries the information related to the second device and carries the information related to the requested duration of the second device, the feedback duration is determined based on the information related to the requested duration of the second device when no subscription-related duration of the second device is obtained based on the information related to the second device.

When the first information does not carry the information related to the second device and carries the information related to the requested duration of the second device, the feedback duration is determined based on the information related to the requested duration of the second device.

When the information related to the requested duration of the second device includes a requested feedback duration of the second device, the feedback duration is the requested feedback duration of the second device. Alternatively, when the information related to the requested duration of the second device includes a requested processing duration of the second device and does not include a requested feedback duration of the second device, the feedback duration is the requested processing duration of the second device increased by a first duration. Alternatively, when the information related to the requested duration of the second device includes a requested processing duration of the second device and does not include a requested feedback duration of the second device, the feedback duration is the requested processing duration of the second device.

The value of the first timer is equal to the feedback duration.

The first duration is preset, or determined based on the subscribed processing duration of the second device, or determined based on the information related to the second device.

The first communication unit is configured to perform at least one of: sending second information to a second device after receiving the first information, where the second information carries the feedback duration; or sending third information to a third device after receiving the first information, where the third information carries the feedback duration.

The first communication unit is configured to perform one of: receiving the first information from a second device; or receiving the first information from a fifth device.

The third device is one of: a first network device or a first terminal device.

The first device is a second network device, and a second device is a second terminal device.

The second network device is one of: a second access-network device or a second core-network device.

The second terminal device is one of: an IoT device based on ambient energy harvesting or a NB-IoT terminal.

The first device in embodiments of the disclosure can implement corresponding functions of the first device in the above information check method embodiments. For procedures, functions, implementations, and beneficial effects corresponding to modules (submodules, units, or components) in the first device, reference can be made to corresponding descriptions in the above method embodiments, which will not be repeated herein. It may be noted that functions of modules (submodules, units, components, or the like) in the first device in embodiments of the disclosure may be implemented by different modules (submodules, units, components, or the like), or may be implemented by the same module (submodule, unit, component, or the like).

FIG. 15 is a schematic diagram of a structure of a second device according to an embodiment of the disclosure. The second device includes a second communication unit 1501. The second communication unit 1501 is configured to send first information to a first device. The first information is used for determining a feedback duration. The feedback duration is used for determining a value of a first timer. The first timer is started when a first request message is sent.

The first information carries at least one of: information related to the second device or information related to a requested duration of the second device.

The information related to the second device includes at least one of: identity information of the second device, a device type of the second device, or a capability parameter of the second device.

The information related to the requested duration of the second device includes at least one of: a requested processing duration of the second device or a requested feedback duration of the second device. The requested feedback duration of the second device is longer than the requested processing duration of the second device.

The second communication unit is configured to receive the first request message and send a reply message after sending the first information to the first device.

The second communication unit is configured to receive second information from the first device after sending the first information to the first device and before receiving, by the second device, the first request message. The second information carries the feedback duration.

Based on FIG. 15, as illustrated in FIG. 16, the second device further includes a second processing unit 1502 and the second communication unit 1501. The second processing unit 1502 is configured to start a second timer when the second communication unit receives the first request message, and send the reply message through the second communication unit before the second timer expires, where a value of the second timer is determined based on the feedback duration. The second communication unit 1501 is configured to receive the first request message and send the reply message.

The feedback duration is one of: a subscribed feedback duration of the second device, a subscribed processing duration of the second device increased by a first duration, the subscribed processing duration of the second device, a subscribed feedback duration of the second device under a target condition, a subscribed processing duration of the second device under the target condition increased by the first duration, the subscribed processing duration of the second device under the target condition, a requested feedback duration of the second device, a requested processing duration of the second device increased by the first duration, or the requested processing duration of the second device.

The value of the second timer is equal to the feedback duration.

The feedback duration includes one of: a subscribed processing duration of the second device under each of multiple conditions, the subscribed processing duration of the second device under each of the multiple conditions increased by a first duration, or a subscribed processing duration of the second device under each of the multiple conditions. Different conditions among the multiple conditions correspond to different protocol types and/or different message types.

The value of the second timer is determined based on the feedback duration and a target condition. The target condition includes one of: a target protocol type used by the second device or a target message type used by the second device.

The second communication unit is configured to receive the first request message from the first device; and send the reply message to the first device.

The second communication unit is configured to receive the first request message from a third device; and perform one of: sending the reply message to the first device or sending the reply message to the third device.

The third device is one of: a first network device or a first terminal device.

The first device is a second network device, and the second device is a second terminal device.

The second network device is one of: a second access-network device or a second core-network device.

The second terminal device is one of: an IoT device based on ambient energy harvesting or a NB-IoT terminal.

The second device in embodiments of the disclosure can implement corresponding functions of the second device in the above information check method embodiments. For procedures, functions, implementations, and beneficial effects corresponding to modules (submodules, units, or components) in the second device, reference can be made to corresponding descriptions in the above method embodiments, which will not be repeated herein. It may be noted that functions of modules (submodules, units, components, or the like) in the second device in embodiments of the disclosure may be implemented by different modules (submodules, units, components, or the like), or may be implemented by the same module (submodule, unit, component, or the like).

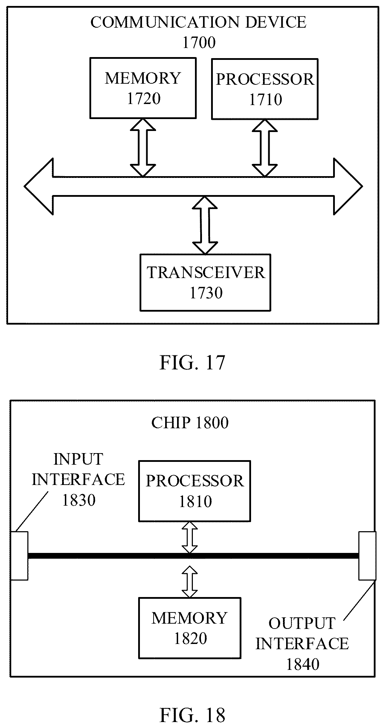

FIG. 17 is a schematic structural diagram of a communication device 1700 according to embodiments of the disclosure. The communication device 1700 includes a processor 1710. The processor 1710 may invoke and execute a computer program stored in a memory, to cause the communication device 1700 to implement the method in embodiments of the disclosure.

In a possible implementation, the communication device 1700 may further include a memory 1720. The processor 1710 may invoke and execute a computer program stored in the memory 1720, to cause the communication device 1700 to implement the method in embodiments of the disclosure.

The memory 1720 may be a separate device independent of the processor 1710, or may be integrated into the processor 1710.

In a possible implementation, the communication device 1700 may further include a transceiver 1730. The processor 1710 may control the transceiver 1730 to communicate with another device, and specifically, may send information or data to another device, or receive information or data from the another device.

The transceiver 1730 may include a transmitter and a receiver. The transceiver 1730 may further include an antenna, where one or more antennas may be provided.

In a possible implementation, the communication device 1700 may be the first device in embodiments of the disclosure, and the communication device 1700 may implement a corresponding procedure implemented by the first device in the methods according to embodiments of the disclosure, which will not be repeated herein for the sake of simplicity.

FIG. 18 is a schematic structural diagram of a chip 1800 according to embodiments of the disclosure. The chip 1800 includes a processor 1810. The processor 1810 may invoke and execute a computer program stored in a memory to implement the method in embodiments of the disclosure.

In a possible implementation, the chip 1800 may further include a memory 1820. The processor 1810 may invoke and execute a computer program stored in the memory 1820, to implement the method performed by the access-network device or the first core-network device in embodiments of the disclosure. The memory 1820 may be a separate device independent of the processor 1810, or may be integrated into the processor 1810.

In a possible implementation, the chip 1800 may further include an input interface 1830. The processor 1810 may control the input interface 1830 to communicate with another device or chip, and specifically, may obtain information or data sent by the another device or chip. In a possible implementation, the chip 1800 may further include an output interface 1840. The processor 1810 may control the output interface 1840 to communicate with another device or chip, and specifically, may output information or data to the another device or chip.

In a possible implementation, the chip may be applied to the first device in embodiments of the disclosure, and the chip may implement corresponding procedures implemented by the first device in the methods according to embodiments of the disclosure, which will not be repeated herein for the sake of simplicity. In a possible implementation, the chip may be applied to the second device in embodiments of the disclosure, and the chip may implement corresponding procedures implemented by the second device in the methods according to embodiments of the disclosure, which will not be repeated herein for the sake of simplicity. The chip applied to the first device may be the same as or different from the chip applied to the second device.

It may be understood that, the chip mentioned in embodiments of the disclosure may also be a system-on-chip (SoC).

The processor mentioned above may be a general-purpose processor, a digital signal processor (DSP), a field programmable gate array (FPGA), an application specific integrated circuit (ASIC), or another programmable logic device, a transistor logic device, a discrete hardware component, or the like. The general-purpose processor may be a microprocessor, or may be any conventional processor or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It may be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

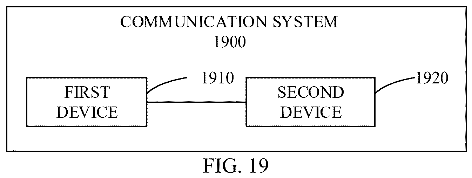

FIG. 19 is a schematic block diagram of a communication system 1900 according to embodiments of the disclosure. The communication system 1900 includes a first device 1910 and a second device 1920. The first device 1910 may be configured to implement corresponding functions implemented by the first device in the above methods. The second device 1920 may be configured to implement corresponding functions implemented by the second device in the above methods, which will not be repeated herein for the sake of simplicity.

All or part of the above embodiments can be implemented through software, hardware, firmware, or any other combination thereof. When implemented by software, all or part of the above embodiments can be implemented in the form of a computer program product. The computer program product includes one or more computer instructions. When the computer program instructions are applied and executed on a computer, all or part of the operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

It may be understood that in various embodiments of the disclosure, the magnitude of a sequence number of each of the above processes does not mean an execution order, and an execution order of each process can be determined according to a function and an internal logic of the process, which shall not constitute any limitation to an implementation process of embodiments of the disclosure.

It will be evident to those skilled in the art that, for the sake of convenience and simplicity, in terms of the specific working processes of the foregoing systems, apparatuses, and units, reference can be made to the corresponding processes in the above method embodiments, which will not be repeated herein.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A communication method, comprising:
receiving, by a first device, first information, wherein the first information is used for determining a feedback duration, the feedback duration is used for determining a value of a first timer, and the first timer is started when a first request message is sent.

2. The method of claim 1, wherein after receiving, by the first device, the first information, the method further comprises:
sending, by the first device, the first request message to a second device, and starting the first timer, wherein the first request message is used for triggering the second device to send a reply message.

3. The method of claim 1, wherein after receiving, by the first device, the first information, the method further comprises:
indicating, by the first device, a third device to send the first request message to a second device, and starting the first timer, wherein the first request message is used for triggering the second device to send a reply message.

4. The method of claim 2 or 3, wherein after starting the first timer, the method further comprises:
when the first timer expires and no reply message is received from the second device, performing, by the first device, one of:
sending a second request message to the second device;
notifying a fourth device that no reply message is received;
determining that the second device is unreachable; or
determining that the second device is in an abnormal state.

5. The method of claim 2 or 3, wherein after starting the first timer, the method further comprises:
stopping, by the first device, the first timer when the first timer has not expired and the reply message is received from the second device.

6. The method of any one of claims 2 to 5, further comprising:
receiving, by the first device, first indication information, wherein the first indication information indicates to send the first request message.

7. The method of any one of claims 1 to 6, wherein the first information carries at least one of: information related to a second device or information related to a requested duration of the second device.

8. The method of claim 7, wherein the information related to the second device comprises at least one of: identity information of the second device, a device type of the second device, or a capability parameter of the second device.

9. The method of claim 7, wherein the information related to the requested duration of the second device comprises at least one of: a requested processing duration of the second device or a requested feedback duration of the second device, wherein the requested feedback duration of the second device is longer than the requested processing duration of the second device.

10. The method of any one of claims 7 to 9, wherein the first information carries the information related to the second device, the feedback duration is determined based on a subscription-related duration of the second device, and the subscription-related duration of the second device is determined based on the information related to the second device.

11. The method of claim 10, wherein the subscription-related duration of the second device comprises at least one of: a subscribed processing duration of the second device or a subscribed feedback duration of the second device, wherein the subscribed feedback duration of the second device is longer than the subscribed processing duration of the second device.

12. The method of claim 11, wherein when the subscription-related duration of the second device comprises the subscribed feedback duration of the second device, the feedback duration is the subscribed feedback duration of the second device.

13. The method of claim 11, wherein when the subscription-related duration of the second device comprises the subscribed processing duration of the second device and does not comprise the subscribed feedback duration of the second device, the feedback duration is one of:
the subscribed processing duration of the second device increased by a first duration; or
the subscribed processing duration of the second device.

14. The method of claim 10, wherein the subscription-related duration of the second device comprises at least one of: a plurality of subscribed processing durations of the second device or a plurality of subscribed feedback durations of the second device.

15. The method of claim 14, wherein the plurality of subscribed feedback durations of the second device comprise a subscribed feedback duration of the second device under each of a plurality of conditions.

16. The method of claim 14, wherein the plurality of subscribed processing durations of the second device comprise a subscribed processing duration of the second device under each of a plurality of conditions.

17. The method of claim 15 or 16, wherein different conditions among the plurality of conditions correspond to different protocol types and/or different message types.

18. The method of any one of claims 15 to 17, wherein when the subscription-related duration of the second device comprises the plurality of subscribed processing durations of the second device, the feedback duration comprises the plurality of subscribed processing durations of the second device.

19. The method of any one of claims 15 to 17, wherein when the subscription-related duration of the second device comprises the plurality of subscribed processing durations of the second device and does not comprise the plurality of subscribed feedback durations of the second device, the feedback duration comprises one of: the plurality of subscribed processing durations of the second device each increased by a first duration; or the plurality of subscribed processing durations of the second device.

20. The method of claim 18 or 19, wherein the value of the first timer is determined based on the feedback duration and a target condition, wherein the target condition comprises at least one of: a target protocol type used by the second device or a target message type used by the second device.

21. The method of any one of claims 15 to 17, wherein when the subscription-related duration of the second device comprises the plurality of subscribed processing durations of the second device, the feedback duration is a subscribed feedback duration of the second device under a target condition, wherein the target condition comprises at least one of: a target protocol type used by the second device or a target message type used by the second device.

22. The method of any one of claims 15 to 17, wherein when the subscription-related duration of the second device comprises the plurality of subscribed processing durations of the second device and does not comprise the plurality of subscribed feedback durations of the second device, the feedback duration is one of:
a subscribed processing duration of the second device under a target condition increased by a first duration, wherein the target condition comprises at least one of: a target protocol type used by the second device or a target message type used by the second device; or
the subscribed processing duration of the second device under the target condition.

23. The method of any one of claims 7 to 9, wherein when the first information carries the information related to the second device and carries the information related to the requested duration of the second device, the feedback duration is determined based on the information related to the requested duration of the second device when no subscription-related duration of the second device is obtained based on the information related to the second device.

24. The method of any one of claims 7 to 9, wherein when the first information does not carry the information related to the second device and carries the information related to the requested duration of the second device, the feedback duration is determined based on the information related to the requested duration of the second device.

25. The method of claim 23 or 24, wherein
when the information related to the requested duration of the second device comprises a requested feedback duration of the second device, the feedback duration is the requested feedback duration of the second device; or
when the information related to the requested duration of the second device comprises a requested processing duration of the second device and does not comprise a requested feedback duration of the second device, the feedback duration is the requested processing duration of the second device increased by a first duration; or
when the information related to the requested duration of the second device comprises a requested processing duration of the second device and does not comprise a requested feedback duration of the second device, the feedback duration is the requested processing duration of the second device.

26. The method of any one of claims 12, 13, 21, 22, and 25, wherein the value of the first timer is equal to the feedback duration.

27. The method of any one of claims 13, 19, 22, and 25, wherein the first duration is preset, or determined based on the subscribed processing duration of the second device, or determined based on the information related to the second device.

28. The method of any one of claims 1 to 27, wherein after receiving, by the first device, the first information, the method further comprises at least one of:
sending, by the first device, second information to a second device, wherein the second information carries the feedback duration; or
sending, by the first device, third information to a third device, wherein the third information carries the feedback duration.

29. The method of claims 1 to 28, wherein receiving, by the first device, the first information comprises one of:
receiving, by the first device, the first information from a second device; or
receiving, by the first device, the first information from a fifth device.

30. The method of claim 3 or 28, wherein the third device is one of: a first network device or a first terminal device.

31. The method of any one of claims 1 to 30, wherein the first device is a second network device, and a second device is a second terminal device.

32. The method of claim 31, wherein the second network device is one of: a second access-network device or a second core-network device, and the second terminal device is one of: an internet of things (IoT) device based on ambient energy harvesting or a narrow band IoT (NB-IoT) terminal.

33. The method of claim 29, wherein the fifth device is an application server.

34. A communication method, comprising:
sending, by a second device, first information to a first device, wherein the first information is used for determining a feedback duration, the feedback duration is used for determining a value of a first timer, and the first timer is started when a first request message is sent.

35. The method of claim 34, wherein the first information carries at least one of: information related to the second device or information related to a requested duration of the second device.

36. The method of claim 35, wherein the information related to the second device comprises at least one of: identity information of the second device, a device type of the second device, or a capability parameter of the second device.

37. The method of claim 35, wherein the information related to the requested duration of the second device comprises at least one of: a requested processing duration of the second device or a requested feedback duration of the second device, wherein the requested feedback duration of the second device is longer than the requested processing duration of the second device.

38. The method of any one of claims 34 to 37, wherein after sending, by the second device, the first information to the first device, the method further comprises:
receiving, by the second device, the first request message, and sending a reply message.

39. The method of claim 38, wherein after sending, by the second device, the first information to the first device and before receiving, by the second device, the first request message, the method further comprises:
receiving, by the second device, second information from the first device, wherein the second information carries the feedback duration.

40. The method of claim 39, wherein receiving, by the second device, the first request message, and sending the reply message comprise:
receiving, by the second device, the first request message, and starting a second timer; and
sending, by the second device, the reply message before the second timer expires, wherein a value of the second timer is determined based on the feedback duration.

41. The method of claim 40, wherein the feedback duration is one of: a subscribed feedback duration of the second device, a subscribed processing duration of the second device increased by a first duration, the subscribed processing duration of the second device, a subscribed feedback duration of the second device under a target condition, a subscribed processing duration of the second device under the target condition increased by the first duration, the subscribed processing duration of the second device under the target condition, a requested feedback duration of the second device, a requested processing duration of the second device increased by the first duration, or the requested processing duration of the second device.

42. The method of claim 41, wherein the value of the second timer is equal to the feedback duration.

43. The method of claim 40, wherein the feedback duration comprises one of: a subscribed processing duration of the second device under each of a plurality of conditions, the subscribed processing duration of the second device under each of the plurality of conditions increased by a first duration, or a subscribed processing duration of the second device under each of the plurality of conditions, wherein
different conditions among the plurality of conditions correspond to different protocol types and/or different message types.

44. The method of claim 43, wherein the value of the second timer is determined based on the feedback duration and a target condition, wherein the target condition comprises one of: a target protocol type used by the second device or a target message type used by the second device.

45. The method of any one of claims 38 to 44, wherein
receiving, by the second device, the first request message comprises: receiving, by the second device, the first request message from the first device; and
sending the reply message comprises: sending, by the second device, the reply message to the first device.

46. The method of any one of claims 38 to 44, wherein
receiving, by the second device, the first request message comprises: receiving, by the second device, the first request message from a third device; and
sending the reply message comprises one of: sending, by the second device, the reply message to the first device, or sending, by the second device, the reply message to the third device.

47. The method of claim 46, wherein the third device is one of: a first network device or a first terminal device.

48. The method of any one of claims 34 to 47, wherein the first device is a second network device, and the second device is a second terminal device.

49. The method of claim 48, wherein the second network device is one of: a second access-network device or a second core-network device.

50. The method of claim 48, wherein the second terminal device is one of: an internet of things (IoT) device based on ambient energy harvesting or a narrow band IoT (NB-IoT) terminal.

51. A first device, comprising:
a first communication unit configured to receive first information, wherein the first information is used for determining a feedback duration, the feedback duration is used for determining a value of a first timer, and the first timer is started when a first request message is sent.

52. The first device of claim 51, further comprising:
a first processing unit configured to start the first timer when the first communication unit sends the first request message to a second device; and
the first communication unit configured to send the first request message to the second device, wherein the first request message is used for triggering the second device to send a reply message.

53. The first device of claim 51, further comprising:
a first processing unit configured to start the first timer when a third device is indicated to send the first request message to a second device; and
the first communication unit configured to indicate the third device to send the first request message to the second device, wherein the first request message is used for triggering the second device to send a reply message.

54. The first device of claim 52 or 53, wherein the first processing unit is configured to, after starting the first timer, when the first timer expires and the first communication unit receives no reply message from the second device, perform one of:
sending a second request message to the second device through the first communication unit;
notifying through the first communication unit a fourth device that no reply message is received;
determining that the second device is unreachable; or
determining that the second device is in an abnormal state.

55. The first device of claim 52 or 53, wherein the first processing unit is configured to, after starting the first timer, stop the first timer when the first timer has not expired and the first communication unit receives the reply message from the second device.

56. The first device of any one of claims 52 to 55, wherein the first communication unit is configured to receive first indication information, wherein the first indication information indicates to send the first request message.

57. The first device of any one of claims 51 to 56, wherein the first information carries at least one of: information related to a second device or information related to a requested duration of the second device.

58. The first device of claim 57, wherein the information related to the second device comprises at least one of: identity information of the second device, a device type of the second device, or a capability parameter of the second device.

59. The first device of claim 57, wherein the information related to the requested duration of the second device comprises at least one of: a requested processing duration of the second device or a requested feedback duration of the second device, wherein the requested feedback duration of the second device is longer than the requested processing duration of the second device.

60. The first device of any one of claims 57 to 59, wherein the first information carries the information related to the second device, the feedback duration is determined based on a subscription-related duration of the second device, and the subscription-related duration of the second device is determined based on the information related to the second device.

61. The first device of claim 60, wherein the subscription-related duration of the second device comprises at least one of: a subscribed processing duration of the second device or a subscribed feedback duration of the second device, wherein the subscribed feedback duration of the second device is longer than the subscribed processing duration of the second device.

62. The first device of claim 61, wherein when the subscription-related duration of the second device comprises the subscribed feedback duration of the second device, the feedback duration is the subscribed feedback duration of the second device.

63. The first device of claim 61, wherein when the subscription-related duration of the second device comprises the subscribed processing duration of the second device and does not comprise the subscribed feedback duration of the second device, the feedback duration is one of: the subscribed processing duration of the second device increased by a first duration; or the subscribed processing duration of the second device.

64. The first device of claim 60, wherein the subscription-related duration of the second device comprises at least one of: a plurality of subscribed processing durations of the second device or a plurality of subscribed feedback durations of the second device.

65. The first device of claim 64, wherein the plurality of subscribed feedback durations of the second device comprise a subscribed feedback duration of the second device under each of a plurality of conditions.

66. The first device of claim 64, wherein the plurality of subscribed processing durations of the second device comprise a subscribed processing duration of the second device under each of a plurality of conditions.

67. The first device of claim 65 or 66, wherein different conditions among the plurality of conditions correspond to different protocol types and/or different message types.

68. The first device of any one of claims 65 to 67, wherein when the subscription-related duration of the second device comprises the plurality of subscribed processing durations of the second device, the feedback duration comprises the plurality of subscribed processing durations of the second device.

69. The first device of any one of claims 65 to 67, wherein when the subscription-related duration of the second device comprises the plurality of subscribed processing durations of the second device and does not comprise the plurality of subscribed feedback durations of the second device, the feedback duration comprises one of: the plurality of subscribed processing durations of the second device each increased by a first duration; or the plurality of subscribed processing durations of the second device.

70. The first device of claim 68 or 69, wherein the value of the first timer is determined based on the feedback duration and a target condition, wherein the target condition comprises at least one of: a target protocol type used by the second device or a target message type used by the second device.

71. The first device of any one of claims 65 to 67, wherein when the subscription-related duration of the second device comprises the plurality of subscribed processing durations of the second device, the feedback duration is a subscribed feedback duration of the second device under a target condition, wherein the target condition comprises at least one of: a target protocol type used by the second device or a target message type used by the second device.

72. The first device of any one of claims 65 to 67, wherein when the subscription-related duration of the second device comprises the plurality of subscribed processing durations of the second device and does not comprise the plurality of subscribed feedback durations of the second device, the feedback duration is one of:
a subscribed processing duration of the second device under a target condition increased by a first duration, wherein the target condition comprises at least one of: a target protocol type used by the second device or a target message type used by the second device; or
the subscribed processing duration of the second device under the target condition.

73. The first device of any one of claims 57 to 59, wherein when the first information carries the information related to the second device and carries the information related to the requested duration of the second device, the feedback duration is determined based on the information related to the requested duration of the second device when no subscription-related duration of the second device is obtained based on the information related to the second device.

74. The first device of any one of claims 57 to 59, wherein when the first information does not carry the information related to the second device and carries the information related to the requested duration of the second device, the feedback duration is determined based on the information related to the requested duration of the second device.

75. The first device of claim 73 or 74, wherein
when the information related to the requested duration of the second device comprises a requested feedback duration of the second device, the feedback duration is the requested feedback duration of the second device; or
when the information related to the requested duration of the second device comprises a requested processing duration of the second device and does not comprise a requested feedback duration of the second device, the feedback duration is the requested processing duration of the second device increased by a first duration; or
when the information related to the requested duration of the second device comprises a requested processing duration of the second device and does not comprise a requested feedback duration of the second device, the feedback duration is the requested processing duration of the second device.

76. The first device of any one of claims 62, 63, 71, 72, and 75, wherein the value of the first timer is equal to the feedback duration.

77. The first device of any one of claims 63, 69, 72, and 75, wherein the first duration is preset, or determined based on the subscribed processing duration of the second device, or determined based on the information related to the second device.

78. The first device of any one of claims 51 to 77, wherein the first communication unit is configured to perform at least one of:
sending second information to a second device after receiving the first information, wherein the second information carries the feedback duration; or
sending third information to a third device after receiving the first information, wherein the third information carries the feedback duration.

79. The first device of any one of claims 51 to 78, wherein the first communication unit is configured to perform one of:
receiving the first information from a second device; or
receiving the first information from a fifth device.

80. The first device of claim 53 or 78, wherein the third device is one of: a first network device or a first terminal device.

81. The first device of any one of claims 51 to 80, wherein the first device is a second network device, and a second device is a second terminal device.

82. The first device of claim 81, wherein the second network device is one of: a second access-network device or a second core-network device, and the second terminal device is one of: an internet of things (IoT) device based on ambient energy harvesting or a narrow band IoT (NB-IoT) terminal.

83. The first device of claim 79, wherein the fifth device is an application server.

84. A second device, comprising:
a second communication unit configured to send first information to a first device, wherein the first information is used for determining a feedback duration, the feedback duration is used for determining a value of a first timer, and the first timer is started when a first request message is sent.

85. The second device of claim 84, wherein the first information carries at least one of: information related to the second device or information related to a requested duration of the second device.

86. The second device of claim 85, wherein the information related to the second device comprises at least one of: identity information of the second device, a device type of the second device, or a capability parameter of the second device.

87. The second device of claim 85, wherein the information related to the requested duration of the second device comprises at least one of: a requested processing duration of the second device or a requested feedback duration of the second device, wherein the requested feedback duration of the second device is longer than the requested processing duration of the second device.

88. The second device of any one of claims 84 to 87, wherein the second communication unit is configured to receive the first request message and send a reply message after sending the first information to the first device.

89. The second device of claim 88, wherein the second communication unit is configured to receive second information from the first device after sending the first information to the first device and before receiving, by the second device, the first request message, wherein the second information carries the feedback duration.

90. The second device of claim 89, further comprising:
a second processing unit configured to start a second timer when the second communication unit receives the first request message, and send the reply message through the second communication unit before the second timer expires, wherein a value of the second timer is determined based on the feedback duration; and
the second communication unit configured to receive the first request message and send the reply message.

91. The second device of claim 90, wherein the feedback duration is one of: a subscribed feedback duration of the second device, a subscribed processing duration of the second device increased by a first duration, the subscribed processing duration of the second device, a subscribed feedback duration of the second device under a target condition, a subscribed processing duration of the second device under the target condition increased by the first duration, the subscribed processing duration of the second device under the target condition, a requested feedback duration of the second device, a requested processing duration of the second device increased by the first duration, or the requested processing duration of the second device.

92. The second device of claim 91, wherein the value of the second timer is equal to the feedback duration.

93. The second device of claim 90, wherein the feedback duration comprises one of: a subscribed processing duration of the second device under each of a plurality of conditions, the subscribed processing duration of the second device under each of the plurality of conditions increased by a first duration, or a subscribed processing duration of the second device under each of the plurality of conditions, wherein different conditions among the plurality of conditions correspond to different protocol types and/or different message types.

94. The second device of claim 93, wherein the value of the second timer is determined based on the feedback duration and a target condition, wherein the target condition comprises one of: a target protocol type used by the second device or a target message type used by the second device.

95. The second device of any one of claims 88 to 94, wherein the second communication unit is configured to receive the first request message from the first device; and send the reply message to the first device.

96. The second device of any one of claims 88 to 94, wherein the second communication unit is configured to receive the first request message from a third device; and perform one of: sending the reply message to the first device or sending the reply message to the third device.

97. The second device of claim 96, wherein the third device is one of: a first network device or a first terminal device.

98. The second device of any one of claims 84 to 97, wherein the first device is a second network device, and the second device is a second terminal device.

99. The second device of claim 98, wherein the second network device is one of: a second access-network device or a second core-network device.

100. The second device of claim 98, wherein the second terminal device is one of: an internet of things (IoT) device based on ambient energy harvesting or a narrow band IoT (NB-IoT) terminal.

101. A first device, comprising a transceiver, a processor, and a memory, wherein the memory is configured to store a computer program, the processor is configured to invoke and execute the computer program stored in the memory, to cause the first device to perform the method of any one of claims 1 to 33.

102. A second device, comprising a transceiver, a processor, and a memory, wherein the memory is configured to store a computer program, the processor is configured to invoke and execute the computer program stored in the memory, to cause the second device to perform the method of any one of claims 34 to 50.

103. A chip, comprising a processor, wherein the processor is configured to invoke and execute a computer program stored in a memory, to cause a device equipped with the chip to perform the method of any one of claims 1 to 33 or the method of any one of claims 34 to 50.

104. A computer-readable storage medium configured to store a computer program which, when executed by a device, causes the device to perform the method of any one of claims 1 to 33 or the method of any one of claims 34 to 50.

105. A computer program product comprising computer program instructions which cause a computer to perform the method of any one of claims 1 to 33 or the method of any one of claims 34 to 50.

106. A computer program causing a computer to perform the method of any one of claims 1 to 33 or the method of any one of claims 34 to 50.
